# EUROPEAN PATENT SPECIFICATION

(11) **EP 4 539 431 B1**
(45) Date of publication and mention of the grant of the patent: **26.08.2026**
(21) Application number: 23826329.7
(22) Date of filing: 19.06.2023
(51) Int. Cl.: H04L 67/1012, H04L 67/1008, H04L 67/51, H04W 48/16

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 24.06.2022 CN 202210731521; 03.10.2022 CN 202211218366
(43) Date of publication of application: 16.04.2025
(73) Proprietor: Huawei Technologies Co., Ltd., Shenzhen, Guangdong 518129 (CN)
(72) Inventor: ZHANG, Jian, Shenzhen, Guangdong 518129 (CN); YANG, Yanmei, Shenzhen, Guangdong 518129 (CN); HU, Yajie, Shenzhen, Guangdong 518129 (CN)
(74) Representative: Thun, Clemens
(86) International application number: PCT/CN2023/100999
(87) International publication number: WO 2023/246681

(56) References cited:
- WO-A1-2021/225387
- WO-A1-2021/225406
- WO-A1-2022/067829
- CN-A- 113 630 266
- CN-A- 113 784 371
- CN-A- 113 872 995
- INTERDIGITAL: "Solution for KI#9 - Enhancement of dynamic EAS instantiation triggering", vol. SA WG6, no. e-meeting; 20211115 - 20211123, 21 November 2021 (2021-11-21), XP052080045, Retrieved from the Internet <URL:https://ftp.3gpp.org/tsg_sa/WG6_MissionCritical/TSGS6_046-e/docs/S6-212719.zip S6-212719_was_212625_Rev3-Solution for KI#9 - Enhancement of dynamic EAS instantiation triggering-v11.doc> [retrieved on 20211121]
- INTERDIGITAL: "Solution for KI#9 - Enhancement of dynamic EAS instantiation triggering", 3GPP DRAFT; S6-212625, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG6, no. e-meeting; 20211115 - 20211123, 10 November 2021 (2021-11-10), Mobile Competence Centre ; 650, route des Lucioles ; F-06921 Sophia-Antipolis Cedex ; France, XP052182383

## Description

### TECHNICAL FIELD

Embodiments of this application relate to the field of wireless communication, and in particular, to a communication method and an apparatus.

### BACKGROUND

Mobile edge computing (mobile edge computing, MEC), also called multi-access edge computing (multi-access edge computing), may use a wireless access network to provide nearby services and cloud computing functions needed by users. In other words, the MEC may provide a carrier-class service environment with high performance, a low latency, and a high bandwidth, to accelerate fast download of various content, services, and applications on a network and enable the users to enjoy uninterrupted high-quality network experience.

For example, a plurality of edge application servers (edge application servers, EASs) may be deployed in an edge data network (edge data network, EDN), and a terminal device may access a nearby EAS to obtain a corresponding application service. In this way, a high bandwidth is obtained, a response latency is shortened, and a requirement of a user on an application service can be met.

Further, to enable the terminal device to determine an EAS that needs to be accessed, there is a two-level discovery mechanism of the EAS currently. For example, an edge enabler client (edge enabler client, EEC) first discovers an edge enabler server (edge enabler server, EES) through an edge configuration server (edge configuration server, ECS), and then the EEC discovers the EAS from the EES. In other words, before the EAS is discovered, the EES needs to be discovered first. Therefore, how to select a proper EES is a problem worthy of attention.
The document CN 113 872 995 A1 shows a method and apparatus for selecting an edge-enabled client. Especially, a discovery and selection of edge enabler servers is shown.
The document INTERDIGITAL: "Solution for KI'9 - Enhancement of dynamic EAS instantiation triggering", XP052080045 is a standardization proposal suggesting that non-instantiated servers may be discoverable.

### SUMMARY

The present invetion is defined by the independent claims. Further advantageous developments are shown by the dependent claims.

This application provides a communication method and an apparatus, to select a proper EES. According to a first aspect, this application provides a communication method. The method includes: An edge configuration server receives a request message, where the request message is used to request information about an edge enabler server, and the request message includes an identifier of a first edge application server, the edge configuration server determines one first edge enabler server based on status information of a plurality of first edge application servers, where a status of a first edge application server corresponding to the first edge enabler server is an instantiable but not yet instantiated state, and the edge configuration server sends a response message, where the response message includes information about the first edge enabler server.

According to the foregoing design, the edge configuration server may determine the one first edge enabler server based on the status information of the plurality of first edge application servers and the status of the first edge application server corresponding to the first edge enabler server herein is the instantiable but not yet instantiated state. In other words, the edge configuration server selects only the one first edge enabler server, and the status of the first edge application server corresponding to the first edge enabler server is the instantiable but not yet instantiated state. Therefore, the edge configuration server may subsequently send only an edge application server discovery request message to the first edge enabler server. In this way, only the first edge application server on the first edge enabler server may be instantiated, but not all first edge enabler servers on a plurality of edge enabler servers may be instantiated, so that a problem of a waste of edge data network resources caused by instantiation of an unnecessary edge application server can be avoided.

In a possible design, the status information of the first edge application server indicates that a status of the first edge application server is an instantiated state or an instantiable but not yet instantiated state.

In a possible design, the edge configuration server obtains the status information of the plurality of first edge application servers from a plurality of edge enabler servers.

For example, the edge configuration server may obtain the status information of the first edge application server from the edge enabler server by using a registration request message or a registration update message.

In a possible design, that before the edge configuration server determines one first edge enabler server based on status information of a plurality of first edge application servers determines, based on the status information of the plurality of first edge application servers, that a first edge application server whose status is an instantiated state does not exist.

For example, the edge configuration server may determine, based on the status information of the plurality of first edge application servers, whether the first edge application server whose status is the instantiated state exists.

If it is determined that the first edge application server whose status is the instantiated state exists, the edge configuration server may send information about an edge enabler server corresponding to the first edge application server whose status is the instantiated state, so that the edge enabler client or the source edge enabler server can preferentially select a first edge application server that is an instantiated state and that meets a condition, without instantiating a new edge application server.

If it is determined that the first edge application server whose status is the instantiated state does not exist, the edge configuration server may determine one first edge enabler server based on status information of a plurality of first edge application servers. Because a status of a first edge application server corresponding to the first edge enabler server is an instantiable but not yet instantiated state, it can be implemented that when the first edge application server in the instantiated state does not exist, a new first edge application server can be instantiated to provide a corresponding service application for the terminal device.

In a possible design, the edge configuration server receives indication information, where the indication information indicates that instantiation of a first edge application server corresponding to the first edge enabler server fails, and the edge configuration server sends information about one second edge enabler server other than the first edge enabler server, where a status of a first edge application server corresponding to the second edge enabler server is an instantiable but not yet instantiated state.

According to the foregoing design, when the instantiation of the first edge application server corresponding to the first edge enabler server fails, the edge configuration server may provide information about a new edge enabler server, and a first edge application server corresponding to the edge enabler server is in an instantiable but not yet instantiated state.

It may be understood that the edge configuration server may receive the indication information from the edge enabler client, and send the information about the second edge enabler server to the edge enabler client. Alternatively, the edge configuration server may receive the indication information from the source edge enabler server, and send the information about the second edge enabler server to the source edge enabler server.

In a possible design, when an edge configuration server receives a request message, the edge configuration server receives the request message from an edge enabler client; and when the edge configuration server sends a response message, the edge configuration server sends the response message to the edge enabler client.

In a possible design, when an edge configuration server receives a request message, the edge configuration server receives the request message from a source edge enabler server; and when the edge configuration server sends a response message, the edge configuration server sends the response message to the source edge enabler server.

According to a second aspect, this application provides a communication method. The method includes: An edge configuration server receives a request message, where the request message is used to request information about an edge enabler server, the request message includes an identifier of a first edge application server, and the edge configuration server sends a response message, where the response message includes information about at least one edge enabler server and status information of a first edge application server respectively corresponding to the at least one edge enabler server.

The status information of the first edge application server respectively corresponding to the at least one edge enabler server may also be described as status information of a first edge application server corresponding to each of the at least one edge enabler server.

According to the foregoing design, the edge configuration server may provide the status information of the first edge application server respectively corresponding to the at least one edge enabler server, so that an edge enabler client or a source edge enabler server can be assisted in determining one first edge enabler server. The status of the first edge application server corresponding to the first edge enabler server herein is the instantiable but not yet instantiated state. In other words, the edge configuration server selects only the one first edge enabler server. Therefore, the edge configuration server may subsequently send only an edge application server discovery request message to the first edge enabler server. In this way, only the first edge application server on the first edge enabler server may be instantiated, but not all first edge enabler servers on a plurality of edge enabler servers may be instantiated, so that a problem of a waste of edge data network resources caused by instantiation of an unnecessary edge application server can be avoided.

In a possible design, the status information of the first edge application server respectively corresponding to the at least one edge enabler server determines the one first edge enabler server, where a status of a first edge application server corresponding to the first edge enabler server is an instantiable but not yet instantiated state.

In a possible design, the status information of the first edge application server indicates that a status of the first edge application server is an instantiated state or an instantiable but not yet instantiated state.

In a possible design, when an edge configuration server receives a request message, the edge configuration server receives the request message from an edge enabler client; and when the edge configuration server sends a response message, the edge configuration server sends the response message to the edge enabler client.

In a possible design, when an edge configuration server receives a request message, the edge configuration server receives the request message from a source edge enabler server; and when the edge configuration server sends a response message, the edge configuration server sends the response message to the source edge enabler server.

According to a third aspect, this application provides a communication method. The method may be performed by an edge enabler client or a source edge enabler server. The method includes: sending a request message to an edge configuration server, where the request message is used to request information about an edge enabler server and the request message includes an identifier of the first edge application server; receiving a response message from the edge configuration server, where the response message includes information about at least one edge enabler server and status information of a first edge application server respectively corresponding to the at least one edge enabler server; and determining one first edge enabler server based on the status information of the first edge application server respectively corresponding to the at least one edge enabler server, where a status of a first edge application server corresponding to the first edge enabler server is an instantiable but not yet instantiated state.

The status information of the first edge application server respectively corresponding to the at least one edge enabler server may also be described as status information of a first edge application server corresponding to each of the at least one edge enabler server. In addition, after the first edge enabler server is determined, the edge enabler client or the source edge enabler server may send an edge application server discovery request message to the first edge enabler server.

According to the foregoing design, the edge enabler client or the source edge enabler server may determine the one first edge enabler server based on status information of a first edge application server respectively corresponding to the at least one edge enabler server that is provided by the edge configuration server. The status of the first edge application server corresponding to the first edge enabler server herein is the instantiable but not yet instantiated state. In other words, the edge configuration server selects only the one first edge enabler server. Therefore, the edge configuration server may subsequently send only an edge application server discovery request message to the first edge enabler server. In this way, only the first edge application server on the first edge enabler server may be instantiated, but not all first edge enabler servers on a plurality of edge enabler servers may be instantiated, so that a problem of a waste of edge data network resources caused by instantiation of an unnecessary edge application server can be avoided.

In a possible design, the status information of the first edge application server indicates that the first edge application server is in an instantiated state or in an instantiable but not yet instantiated state.

In a possible design, that before the determining one first edge enabler server based on the status information of the first edge application server respectively corresponding to the at least one edge enabler server determines, based on the status information of the first edge application server respectively corresponding to the at least one edge enabler server, that a first edge application server whose status is an instantiated state does not exist.

For example, the edge enabler client or the source edge enabler server may determine, based on the status information of the first edge application server respectively corresponding to the at least one edge enabler server, whether the first edge application server whose status is the instantiated state exist.

If it is determined that the first edge application server whose status is the instantiated state exists, the edge enabler client or the source edge enabler server may send an edge application server discovery request message to an edge enabler server corresponding to one or more first edge application servers whose status is the instantiated state, so that the edge enabler client or the source edge enabler server can preferentially select a first edge application server that is an instantiated state and that meets a condition, without instantiating a new edge application server.

If it is determined that the first edge application server whose status is the instantiated state does not exist, the edge enabler client or the source edge enabler server may determine the one first edge enabler server based on the status information of the first edge application server respectively corresponding to the at least one edge enabler server. Because a status of a first edge application server corresponding to the first edge enabler server is an instantiable but not yet instantiated state, it can be implemented that when the first edge application server in the instantiated state does not exist, a new first edge application server can be instantiated to provide a corresponding service application for the terminal device.

In a possible design, when instantiation of the first edge application server corresponding to the first edge enabler server fails, determining, based on the status information of the first edge application server respectively corresponding to the at least one edge enabler server, one second edge enabler server other than the first edge enabler server, where a status of a first edge application server corresponding to the second edge enabler server is an instantiable but not yet instantiated state.

According to the foregoing design, when the instantiation of the first edge application server corresponding to the first edge enabler server fails, the edge enabler client or the source edge enabler server may determine a new edge enabler server, and a first edge application server corresponding to the edge enabler server is in an instantiable but not yet instantiated state.

According to a fourth aspect, this application provides a communication method. The method includes: An edge enabler server obtains status information of a first edge application server; and the edge enabler server sends an identifier of the first edge application server and the status information of the first edge application server to an edge configuration server.

According to the foregoing design, the edge enabler server may obtain the identifier of the first edge application server and the status information of the first edge application server, and send the identifier of the first edge application server and the status information of the first edge application server to the edge configuration server.

In a possible design, when an edge enabler server obtains status information of a first edge application server, the edge enabler server obtains status information of the first edge application server from the first edge application server, where the status information of the first edge application server indicates that a status of the first edge application server is an instantiated state.

In a possible design, when an edge enabler server obtains status information of a first edge application server, the edge enabler server obtains status information of the first edge application server from an edge application server management system, where the status information of the first edge application server indicates that the first edge application server is in an instantiable but not yet instantiated state.

According to a fifth aspect, this application further provides an apparatus. The apparatus may execute the foregoing method design. The apparatus may be a chip or a circuit that can execute a function corresponding to the foregoing method, or a device that includes the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device in which the apparatus is installed is enabled to execute the method in any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The function may be implemented by hardware, or may be implemented by executing corresponding software by hardware. The hardware or the software includes one or more units corresponding to the foregoing function.

According to a sixth aspect, this application provides a computer-readable storage medium. The computer-readable storage medium stores a computer program, and when the computer program is run on an apparatus, the method in any one of the foregoing possible designs is performed.

According to a seventh aspect, this application provides a computer program product. The computer program product includes computer program, and when the computer program is run on an apparatus, the method in any one of the foregoing possible designs is performed.

### BRIEF DESCRIPTION OF DRAWINGS

FIG. 1 is a schematic diagram of an edge computing application architecture and a functional model of an application according to this application;
FIG. 2 is a flowchart of EES discovery according to this application;
FIG. 3 is a flowchart of EAS discovery according to this application;
FIG. 4 is a flowchart 1 of requesting EAS instantiation according to this application;
FIG. 5 is a flowchart of initiating EAS discovery by an S-EAS according to this application;
FIG. 6 is a flowchart of performing T-EES discovery by an S-EES according to this application;
FIG. 7 is a flowchart 2 of requesting EAS instantiation according to this application;
FIG. 8 is an overview flowchart 1 of a communication method in this application;
FIG. 9 is an overview flowchart 2 of a communication method in this application;
FIG. 10 is a scenario 1 of an EAS discovery request message according to this application;
FIG. 11 is a scenario 2 of an EAS discovery request message according to this application;
FIG. 12 is a scenario 3 of an EAS discovery request message according to this application;
FIG. 13 is a schematic diagram 1 of a structure of a communication apparatus according to this application; and
FIG. 14 is a schematic diagram 2 of a structure of a communication apparatus according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one item" means one or more items, and "a plurality of items" means two or more items. "At least one item (piece) of the following" or a similar expression thereof means any combination of these items, including a singular item (piece) or any combination of plural items (pieces). For example, at least one of a, b, or c may indicate a, b, c, a-b, a-c, b-c, or a-b-c, where a, b, and c may be in a singular form or a plural form.

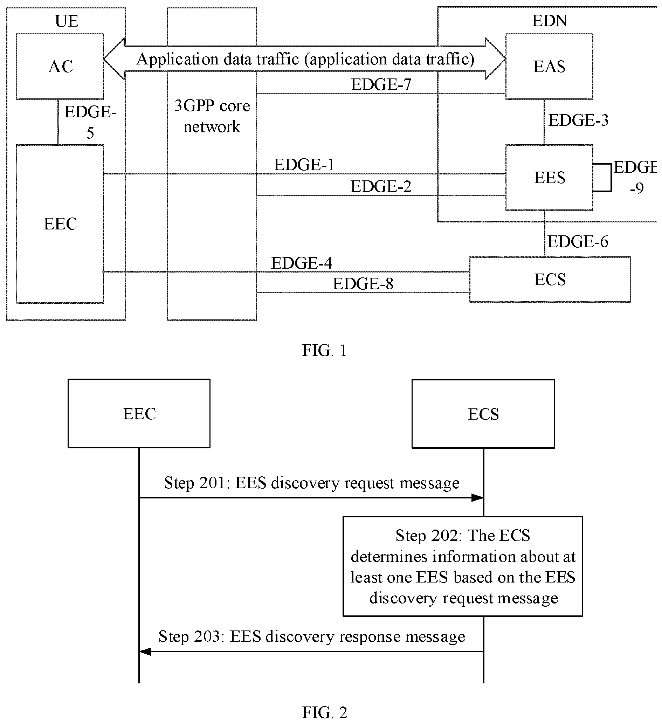

With reference to an edge computing application architecture and a functional model shown in FIG. 1, function entities in this application are briefly described.

### 1.EDN:

In a general understanding, the EDN corresponds to only one data network and is one special local data network (local DN). The EDN contains an edge enabler function, can be identified by a (data network access identifier, DNAI) and a data network name (data network name, DNN), and is a network logical concept. In another understanding of the EDN, the EDN is a peer concept of a central cloud. The EDN can be understood as one local data center (geographical location concept), can be identified by the DNAI, and may include a plurality of local data networks.

### 2.EAS:

The EAS is an application deployed in an edge data network, and specifically refers to an instance (instance) of one server application program (for example, social media software, augmented reality (augmented reality, AR), or virtual reality (virtual reality, VR)) deployed and run on the EDN.

One or more EASs can be deployed for one application on one or more EDNs. EASs deployed on different EDNs can be considered as different EASs of one application. The EASs can share one domain name, use one IP address, or use different IP addresses. The EAS may also be referred to as an edge application instance, an application instance, an MEC application (server), an EAS function, or the like.

### 3. Application client (application client, AC):

The AC is a peer entity of the EAS on a terminal device side. The application client is a client program of an application on the terminal side. The application client may be connected to an application server on a cloud to obtain an application service, or may be connected to an EAS deployed and running in one or more EDNs to obtain an application service.

### 4.EES:

The EES can provide some enabler capabilities for the EAS deployed in the EDN to better support deployment of an application in the EDN. The EES can support registration of the EAS, support authentication and authorization of a terminal device, and provide IP address information of the EAS for the terminal device. The EES may further support obtaining an identifier and the IP address information of the EAS, and further send the identifier and the IP address information of the EAS to an ECS. The EES is deployed in the EDN.

Generally, the EAS is registered with one EES, or information about one EAS is configured on one EES by using a management system (for example, an EAS management system (EAS management system)). The EES is referred to as an EES associated with the EAS. The EES may control, manage registration of, or configure the EAS on the EES.

### 5. Edge enabler client (edge enabler client, EEC):

The EEC is a peer entity of the EES on the terminal device side. The EEC is configured to register information about the EEC and information about the AC with the EES, perform security authentication and authorization, obtain an IP address of the EAS from the EES, and provide an edge computing enabler capability for the AC. For example, an EAS discovery service returns the IP address of the EAS to the AC.

An application user signs a service agreement with a provider of an application, to provide a service for the application user. The application user logs in to an AC on a terminal device and communicates with the EAS by using a connection between the AC and the EAS. The EEC is a middleware layer, and is generally located in an operating system or between the AC and the operating system. The AC can obtain an edge enabler service from the EEC through an application programming interface (application programming interface, API).

### 6. Edge configuration server (edge configuration server, ECS):

The ECS is responsible for configuration of the EDN. One or more EESs can be registered with the ECS, and then EES information can be provided for a terminal device.

For ease of understanding of embodiments of this application, several basic concepts in embodiments of this application are briefly described.

### 1. Two-level discovery mechanism of the EAS:

The two-level discovery mechanism of the EAS may include but is not limited to the following two possible implementations:

In a first possible implementation, the EEC first discovers the EES by using the ECS, which corresponds to an EES discovery (also referred to as service provisioning) procedure, and then the EEC discovers the EAS from the EES, which corresponds to an EAS discovery (EAS discovery) procedure.

FIG. 2 shows the EES discovery procedure.

Step 201: An EEC sends an EES discovery request (also referred to as a service provisioning request) message to an ECS.

For example, the EES discovery request message may include a user equipment (user equipment, UE) identifier, for example, a generic public subscription identifier (generic public subscription identifier, GPSI), connection information, UE location information, and AC configuration information (AC profile). The AC configuration information may include an identifier of the EAS.

Step 202: The ECS determines information about at least one EES based on the EES discovery request message.

For example, the ECS may match, based on the AC configuration information and the UE location information in the EES discovery request message, an EES registered with the ECS, that is, EES that meets the EES discovery request message.

Step 203: The ECS sends an EES discovery response (service provisioning response) message to the EEC.

The message includes information about at least one EES. In addition, the message may further include EDN connection information and the like.

Information about each EES may be shown in Table 1. The information about each EES includes but is not limited to the following content: an EES identifier, and an endpoint address of the EES (for example, a uniform resource identifier (uniform resource identifier, URI), or an IP address).

In addition, if the ECS cannot match the EES based on the EES discovery request message, the ECS sends the EES discovery response message to the EEC, where the EES discovery response message includes a failure cause.

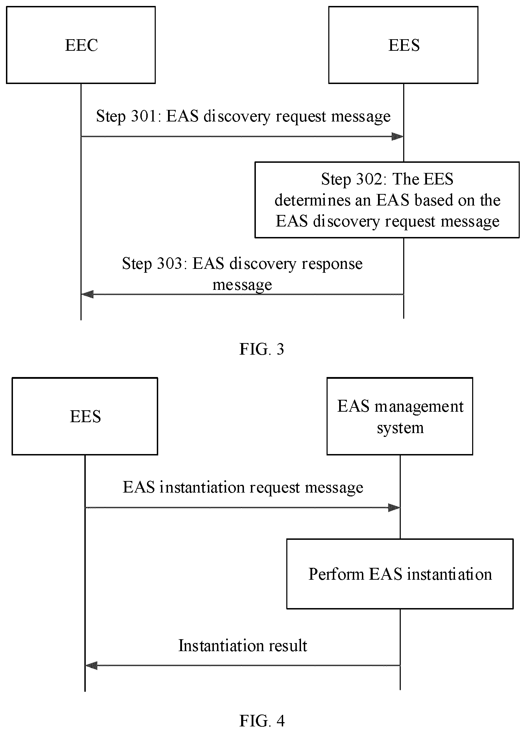

FIG. 3 shows the EAS discovery (EAS discovery) procedure.

Step 301: An EEC sends an EAS discovery request message to an EES.

For example, the EAS discovery request message may include an identifier of the EEC and a security credential, and may further include an EAS discovery filter (EAS discovery filter). The EAS discovery filter is configured to retrieve information about a specific EAS or a specific type of EAS (for example, a game application program).

Step 302: The EES determines an EAS based on the EAS discovery request message.

For example, the EES may identify the EAS based on the EAS discovery filter and location information of UE (which may be obtained from the 3GPP core network).

In addition, as shown in FIG. 4, if an EES does not have an EAS that corresponds to a current UE location or an EAS discovery filter and that is available, the EES may send an EAS instantiation request message to an EAS management system (EAS management system). After receiving the EAS instantiation request message of the EES, the EAS management system performs EAS instantiation, and sends an instantiation result to the EES. If instantiation of the EAS succeeds, the instantiation result includes information about an instantiated EAS.

Step 303: The EES sends an EAS discovery response message to the EEC, where the EAS discovery request includes information about the EAS and the like.

In addition, if EAS discovery fails, for example, the EAS discovery fails because instantiation of an EAS fails. The EAS discovery response message includes a failure cause.

Further, after receiving the EAS discovery response message, the EEC routes application data traffic to the EAS based on received information about the EAS.

**Table 1**

| | | |
|---|---|---|
| EES list | Mandatory M | EES list of an EDN |
| >>List of edge enabler servers | | |
| >>> EES ID | Mandatory M | EES identifier |
| EES endpoint | Mandatory M | Endpoint address of the EES (for example, a uniform resource identifier (uniform resource identifier, URI), or an IP address) |
| >>> EES endpoint | | |
| EAS ID | Optional O | EAS ID registered with the EES |
| >>> Edge application server IDs | | |
| ECSP information | Optional O | Edge computing service provider information |
| >>> ECSP info | | |
| EES topological service area | Optional O | List of a cell identifier (Cell ID) (or tracking area identifier (tracking area identifier, TAI)) served by the EES. An EEC of a terminal device that is connected to a core network and that is in a cell that does not belong to the list should not be served by the EES. |
| >>> EES topological service area | | |
| EES geographical service area | Optional O | Area served by the EES on a geographical value |
| >>> EES geographical service area | | |
| EES DNAI list | Optional O | DNAI related to the EES or the EAS. This information element is used as a potential location of an application program. |
| >>> List of EES DNAI(s) | | |

The foregoing two-level discovery mechanism of the EAS is applicable to a case initiated by the EEC, and is applicable to initial discovery of the EAS (for example, an initial EAS is discovered after an AC is installed or activated), or the EEC detects an application context relocation event (for example, UE movement, where in this case, the foregoing two-level discovery mechanism of the EAS is for discovering a target EAS (target EAS, T-EAS)).

In a second possible implementation, a source edge application server (source EAS, S-EAS) may trigger a source edge enabler server (source EES, S-EES) to request the ECS to discover a target edge enabler server (target EES, T-EES), and then the S-EES requests the T-EES to discover the T-EAS.

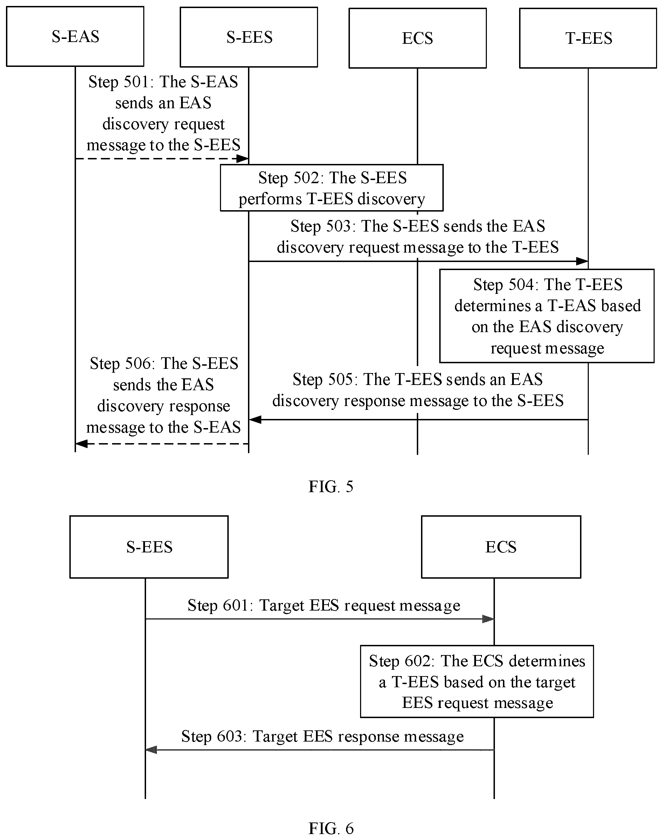

As shown in FIG. 5, an S-EAS detects an application context relocation event, and initiates an EAS discovery procedure, which is specifically as follows:
Step 501: The S-EAS sends an EAS discovery request message to the S-EES.

The EAS discovery request message may include an EAS ID, a security credential, an EAS discovery filter, and the like.

Step 502: The S-EES checks whether the S-EAS is authorized to discover a requested T-EAS. If the S-EAS is authorized to discover the requested T-EAS, the S-EES performs T-EES discovery.

For a specific process, refer to a procedure shown in FIG. 6.

Step 503: The S-EES sends the EAS discovery request message to the T-EES.

Step 504: The T-EES determines a T-EAS based on the EAS discovery request message.

For details, refer to step 302 in FIG. 3. Details are not described herein again.

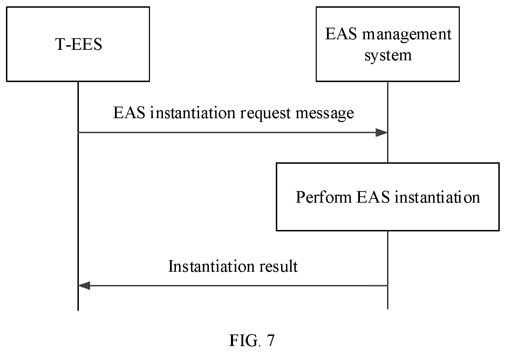

In addition, as shown in FIG. 7, when an S-EES initiates an EAS discovery request message to a T-EES, if the T-EES does not have an EAS that corresponds to a current UE location or an AC application requirement and that is available, the T-EES sends an EAS instantiation request message to an EAS management system. After receiving the EAS instantiation request of the EES, the EAS management system performs EAS instantiation, and sends an instantiation result to the T-EES. If instantiation of the EAS succeeds, the instantiation result includes information about an instantiated EAS, namely, information about the T-EAS.

Step 505: The T-EES sends an EAS discovery response message to the S-EES. The EAS discovery response message includes the information about the T-EAS.

Step 506: The S-EES sends the EAS discovery response message to the S-EAS. The EAS discovery response message includes the information about the T-EAS.

FIG. 6 shows a procedure in which an S-EES discovers a T-EES.

Step 601: The S-EES sends a target EES discovery (also referred to as a retrieve EES) request message to an ECS.

For example, the retrieve EES request message may include UE location information, a UE ID, an EAS ID corresponding to an S-EAS, a target DNAI, and the like.

Step 602: The ECS determines a T-EES based on the target EES discovery request message.

For details, refer to step 202 in FIG. 2.

Step 603: The ECS sends a target EES discovery response message to the S-EES.

For example, the target EES discovery response message includes information about the T-EES and the like.

The foregoing two-level discovery mechanism of the EAS is for a case in which discovery is initiated by the S-EAS or the S-EES (in other words, the S-EES first requests the ECS to discover the T-EES, and then the S-EES requests the T-EES to discover the T-EAS). EAS discovery initiated by the S-EAS or the S-EES is applicable to that the S-EAS or the S-EES detects an application context relocation event (for example, UE movement).

### 2. EAS instantiation

To dynamically schedule and flexibly use a resource, the EAS can be dynamically instantiated to meet an application requirement. For example, when an EAS corresponding to an application A of an edge data network is not accessed by a user (or after a last user ends access and leaves), the EAS may be terminated. When a user accesses the EAS (or when a first user accesses the EAS), the EAS may be dynamically instantiated based on an application requirement (for example, virtual resource information, a needed bandwidth, or a needed latency).

In a current standard, dynamic instantiation of the EAS is allowed. In other words, when an edge data network to be accessed by the user does not have a needed EAS, a request may be initiated to the EAS management system to trigger instantiation of the EAS.

### 3. Status information of the EAS

The status information of the EAS may indicate that a status of the EAS is an instantiated state, an instantiable but not yet instantiated state, or the like.

The status of the EAS is the instantiated state, which means that the EAS has completed an instantiation process. When the status of the EAS is the instantiated state, the EAS may be an available EAS, namely, an instantiated and available EAS. In other words, the EAS can provide a corresponding service application for a terminal device. In this case, the status may also be referred to as an available state, or an instantiated and available state. Alternatively, when the status of the EAS is the instantiated state, the EAS may be an unavailable EAS, namely, an instantiated and unavailable EAS. For example, load of the EAS may be greater than a preset threshold, or the EAS may be a faulty EAS. Consequently, although the EAS is instantiated, the EAS cannot provide a corresponding service application for a terminal device. In this case, the status may also be referred to as an unavailable state or an instantiated and unavailable state. In addition, the instantiated and unavailable EAS may become an instantiated and available EAS again as the load decreases or a fault is rectified.

It should be noted that, in this application, the status of the EAS in the following is the instantiated state, which specifically means that the EAS is the available EAS, or the instantiated and available EAS, and the EAS can provide the corresponding service application for the terminal device.

The status of the EAS can be an instantiable but not yet instantiated state, which means that the EAS can be instantiated, but the EAS has not been instantiated.

The status of the EAS is the instantiable but not yet instantiated state, which may be understood as that the EAS is an available EAS (namely, an available EAS after instantiation). It may also be described as that the instantiable but not yet instantiated state is a specific case of the available state.

Alternatively, the status of the EAS is the instantiable but not yet instantiated state, which may be understood as that the EAS is an unavailable EAS (namely, an EAS that is currently unavailable because it is not instantiated). It may also be described as that the instantiable but not yet instantiated state is a specific case of the unavailable state.

Alternatively, the instantiable but not yet instantiated state is a new status other than the unavailable state and the available state.

In addition, the status information of the EAS may further include a not instantiable state. The status of the EAS is the not instantiable state, which means that the EAS instantiation cannot be completed because no virtual resource needed for the EAS instantiation is available. If the status of the EAS is the not instantiable state, which may be understood as that the EAS is an unavailable EAS. It may also be described as that the not instantiable state is a specific case of the unavailable state.

To select a proper EES, an embodiment of this application provides a communication method. First, status information of a plurality of edge application servers is obtained, and one edge enabler server is further determined based on the status information of the plurality of edge application servers. In this case, a status of an edge application server corresponding to the determined edge enabler server is an instantiable but not yet instantiated state. Therefore, only the edge application server on the edge enabler server may be instantiated, and not all edge enabler servers on the plurality of edge enabler servers may be instantiated. Therefore, a problem of a waste of edge data network resources caused by instantiation of an unnecessary edge application server can be avoided.

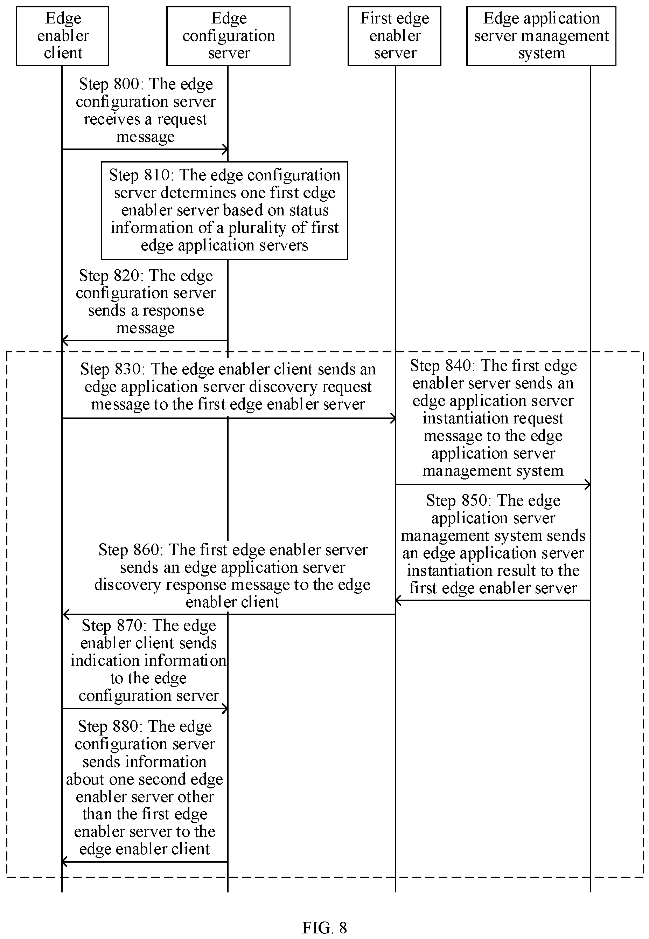

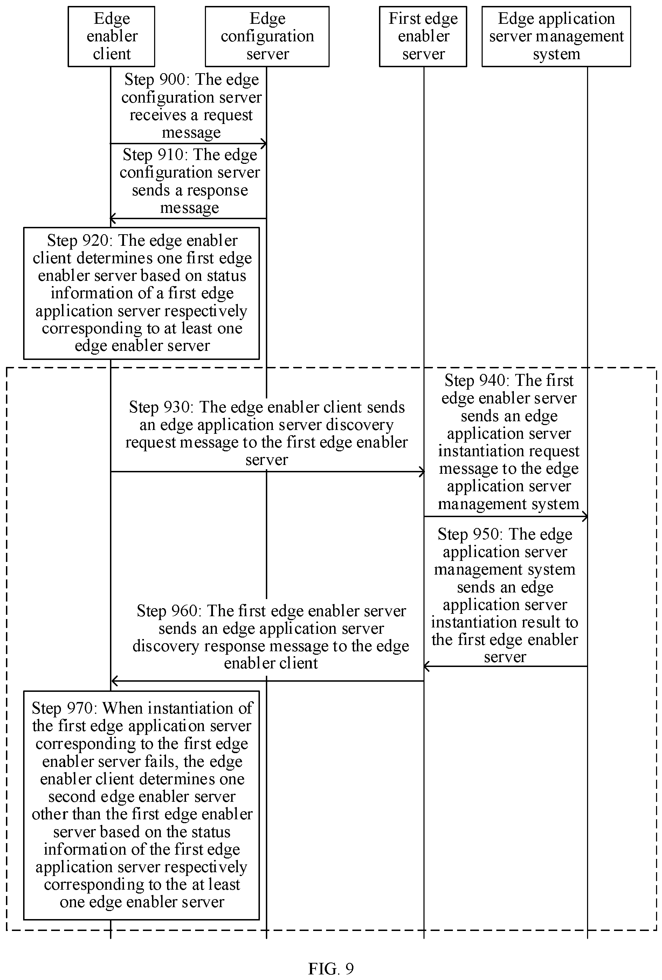

The following describes the foregoing method with reference to FIG. 8 and FIG. 9.

As shown in FIG. 8, the method includes the following steps.

Step 800: An edge configuration server receives a request message. The request message is used to request information about an edge enabler server, and the request message includes an identifier of a first edge application server.

In a possible implementation, the edge configuration server may receive the request message from an edge enabler client. Corresponding to step 820, the edge configuration server sends a response message to the edge enabler client. For example, the request message herein may be an EES discovery request message, and the response message herein may be an EES discovery response message. For specific content included in the EES discovery request message and specific content included in the EES discovery response message, refer to step 201 and step 203. Details are not described herein again. In this case, the request message may include AC configuration information, and the identifier of the first edge application server may be carried in the AC configuration information.

In another possible implementation, the edge configuration server may receive a request message from a source edge enabler server. Corresponding to step 820, the edge configuration server may send a response message to the source edge enabler server. For example, the request message herein may be a target EES discovery request message, and the response message herein may be a target EES discovery response message. For specific content included in the target EES discovery request message and specific content included in the target EES discovery response message, refer to step 601 and step 603. Details are not described herein again. In this case, the identifier of the first edge application server may be provided to the source edge enabler server by using a source edge application server. For example, refer to step 501. An EAS discovery request message sent by the S-EAS to the S-EES may include an EAS ID.

It should be noted that, in FIG. 8, only an example in which the edge configuration server receives the request message from the edge enabler client and sends the response message to the edge enabler client is used for description. In other words, FIG. 8 is described based on the first possible implementation of the foregoing two-level discovery mechanism of the EAS. It may be understood that, based on related descriptions of the second possible implementation of the two-level discovery mechanism of the EAS, the edge enabler client may be alternatively replaced with the source edge enabler server, and the first edge enabler server is replaced with a target edge enabler server.

Step 810: The edge configuration server determines one first edge enabler server based on status information of a plurality of first edge application servers, where a status of a first edge application server corresponding to the first edge enabler server is an instantiable but not yet instantiated state.

It may be understood that before the edge configuration server determines the one first edge enabler server based on the status information of the plurality of first edge application servers, the edge configuration server may first obtain the status information of the plurality of first edge application servers. For example, before step 800, the edge configuration server obtains the status information of the plurality of first edge application servers. Alternatively, after step 800, the edge configuration server obtains the status information of the plurality of first edge application servers. This is not limited in this application.

In a possible implementation, the edge configuration server may obtain the status information of the plurality of first edge application servers from a plurality of edge enabler servers. It may also be described as that the plurality of edge enabler servers provide status information of corresponding first edge application servers for the edge configuration server.

It may be understood that the plurality of edge enabler servers herein each register with the first edge application server, and the first edge application servers registered with different edge enabler servers are different edge application servers of a same application. For example, an EAS #1 and an EAS #2 are registered with an EES #1. The EAS #1 and an EAS #3 are registered with an EES #2. The EAS #1 registered with the EES #1 and the EAS #1 registered with the EES #2 are different EASs of a same application.

For example, the edge enabler server sends, to the edge configuration server, an identifier of the edge enabler server, an identifier of an edge application server registered with the edge enabler server, and status information of the edge application server registered with the edge enabler server. For example, the foregoing content may be carried in a registration request message or a registration update request message sent by the edge enabler server to the edge configuration server.

For example, the EAS #1 and the EAS #2 are registered with the EES#1. The EAS #1 and the EAS #3 are registered with the EES #2. When the EES #1 and the EES #2 are registered with the ECS, the EES #1 sends an identifier of the EES #1, status information of the EAS #1, an identifier of the EAS #1, status information of the EAS #2, and an identifier of the EAS #2 to the ECS. The EES #2 sends an identifier of the EES #2, the status information of the EAS #1, the identifier of the EAS #1, status information of the EAS #3, and an identifier of the EAS #3 to the ECS.

It should be noted that the edge enabler server may obtain, in a plurality of manners, the status information of the edge application server registered with the edge enabler server.

Manner 1: The edge enabler server receives the identifier of the edge application server and the status information of the edge application server from the edge application server. A status of the edge application server is an instantiated state.

For example, the edge application server sends the registration request message to the edge enabler server. The registration request message includes the identifier of the edge application server and the status information of the edge application server. Alternatively, the edge application server sends a registration update message to the edge enabler server. The registration update message includes the identifier of the edge application server and the status information of the edge application server.

Manner 2: The edge enabler server receives the identifier of the edge application server and the status information of the edge application server from an edge application server management system. A status of the edge application server is an instantiable but not yet instantiated state.

Further, the edge enabler server may store obtained content in configuration information (EES profile) of the edge enabler server.

For example, Table 2 shows a correspondence between an EES registered with the ECS, an EAS registered with the EES, and status information of the EAS registered with the EES.

**Table 2**

| | EES ID | EAS ID | EAS status |
|---|---|---|---|
| ECS | EES #1 | EAS #1 | Instantiated state |
| | | EAS #2 | Instantiable but not yet instantiated state |
| | EES #2 | EAS #1 | Instantiated state |
| | | EAS #2 | Instantiable but not yet instantiated state |
| | | EAS #3 | Instantiated state |
| | EES #3 | EAS #1 | Instantiable but not yet instantiated state |
| | | EAS #2 | Instantiable but not yet instantiated state |
| | EES #4 | EAS #4 | Instantiated state |
| | | EAS #5 | Instantiated state |

It can be learned from Table 2 that:
a. EESs registered with the ECS include an EES #1, an EES #2, an EES #3, and an EES #4.
b. EASs registered with the EES #1 include an EAS #1 and an EAS #2.

EASs registered with the EES #2 include an EAS #1, an EAS #2, and an EAS #3.

EASs registered with the EES #3 include an EAS #1 and an EAS #2.

EASs registered with the EES #4 include an EAS #4 and an EAS #5.

c: A status of the EAS #1 registered with the EES #1 is an instantiated state, a status of the EAS #1 registered with the EES #2 is an instantiated state, and a status of the EAS #1 registered with the EES #3 is an instantiable but not yet instantiated state.

A status of the EAS #2 registered with the EES #1 is an instantiable but not yet instantiated state, a status of the EAS #2 registered with the EES #2 is an instantiable but not yet instantiated state, and a status of the EAS #2 registered with the EES #3 is an instantiable but not yet instantiated state.

A status of the EAS #3 registered with the EES #2 is an instantiated state.

A status of the EAS #4 registered with the EES #4 is an instantiated state.

A status of the EAS #5 registered with the EES #4 is an instantiated state.

In a possible implementation, the edge configuration server may first determine the status information of the plurality of first edge application servers based on identifiers of the first edge application servers. For example, the edge configuration server may perform query or retrieval to obtain the status information of the plurality of first edge application servers based on the identifiers of the first edge application servers, and further determine, based on the status information of the plurality of first edge application servers, whether a first edge application server whose status is an instantiated state exists.

If the first edge application server whose status is the instantiated state exists, the edge configuration server may send information about an edge enabler server corresponding to the one or more first edge application servers in the instantiated state, so that the edge enabler client or the source edge enabler server can preferentially select a first edge application server that is in an instantiated state and that meets a condition, without instantiating a new edge application server.

In addition, optionally, when the edge configuration server selects an edge enabler server, reference may be further made to one or more of the following reference bases:
A list of an edge computing service provider (edge computing service provider, ECSP) preferred by an AC, an application context relocation (application context relocation, ACR) scenario preferred by the AC, a service area of the EES, DNAI information of the EES, and location information of a terminal device.

The list of the ECSP preferred by the AC and the ACR scenario preferred by the AC are content included in AC configuration information.

The foregoing content may be included in the request message or obtained by the edge configuration server. Specific content of the reference basis is not limited in this application.

For example, Table 2 is used as an example. If the identifier of the first edge application server is the EAS #1, the edge configuration server determines status information of a plurality of EASs #1 based on the EAS #1 and Table 2, including:

The status of the EAS #1 registered with the EES #1 is the instantiated state, the status of the EAS #1 registered with the EES #2 is the instantiated state, and the status of the EAS #1 registered with the EES #3 is the instantiable but not yet instantiated state.

In this case, the edge configuration server may select one or both of the EES #1 and the EES #2 based on one or more of the foregoing reference bases. It may be understood that, although status information of the EAS #1 registered with the EES #3 is an instantiable but not yet instantiated state, an edge application server selected by the edge configuration server may include only the EES #1 and/or the EES #2, and does not include the EES #3, so that an EAS in an available state can be preferentially used, to avoid a resource waste caused by instantiation of a new EAS. In addition, if the edge enabler client receives the EES #1 and the EES #2, the edge enabler client may send an edge application server discovery request message to the EES #1 and/or the EES #2, that is, send the edge application server discovery request message to one or more EESs.

If it is determined that the first edge application server whose status is the instantiated state does not exist, the edge configuration server may determine one first edge enabler server based on status information of a plurality of first edge application servers. Because a status of a first edge application server corresponding to the first edge enabler server is an instantiable but not yet instantiated state, it can be implemented that when the first edge application server in the instantiated state does not exist, a new first edge application server can be instantiated to provide a corresponding service application for the terminal device.

In other words, before the edge configuration server determines the one first edge enabler server based on the status information of the plurality of first edge application servers, the edge configuration server determines, based on the status information of the plurality of first edge application servers, that the first edge application server whose status is the instantiated state does not exist.

For example, Table 2 is used as an example. If the identifier of the first edge application server is the EAS #2, the edge configuration server may determine status information of a plurality of EASs #2 based on the EAS #2 and Table 2, including: The status of the EAS #2 registered with the EES #1 is the instantiable but not yet instantiated state, the status of the EAS #2 registered with the EES #2 is the instantiable but not yet instantiated state, and the status of the EAS#2 registered with the EES#3 is the instantiable but not yet instantiated state. In other words, the status of the EAS #2 registered with the EES #1, the EES #2, and the EES #3 is in the instantiable but not yet instantiated state. Further, the edge configuration server may select one EES from the EES #1, the EES #2, and the EES #3 based on the AC configuration information, the location information of the terminal device, and the like.

According to the foregoing design, the edge configuration server determines the one first edge enabler server based on the status information of the plurality of first edge application servers. In other words, the edge configuration server selects only the one first edge enabler server, and the status of the first edge application server corresponding to the first edge enabler server is the instantiable but not yet instantiated state. Therefore, the edge configuration server may subsequently send only an edge application server discovery request message to the first edge enabler server. In this way, only the first edge application server on the first edge enabler server may be instantiated, but not all first edge enabler servers on a plurality of edge enabler servers may be instantiated, so that a problem of a waste of edge data network resources caused by instantiation of an unnecessary edge application server can be avoided.

It may be understood that, in a possible implementation, the edge configuration server determines a plurality of first edge enabler servers based on the status information of the plurality of first edge application servers, and sends a response message. The response message includes information about the plurality of first edge enabler servers. In this case, it may be further agreed on, by using indication information or a protocol, that the edge enabler client can send the edge application server discovery request message to only one first edge enabler server each time, so that the problem of the waste of the edge data network resources caused by the instantiation of the unnecessary edge application server can be avoided.

In addition, in a possible scenario, if the edge configuration server fails to obtain the status information of the first edge application server or statuses of the plurality of first edge application servers each are a not instantiable state, edge enabler server discovery fails. The edge configuration server sends a response message, and the response message may indicate that the edge enabler server discovery fails, and carry a cause of the edge enabler server discovery failure.

Step 820: The edge configuration server sends a response message. The response message includes information about the first edge enabler server.

The information about the first edge enabler server may include an identifier of the first edge enabler server, an endpoint address of the first edge enabler server, and the like. For details, refer to Table 1.

Optionally, after the edge enabler client receives the response message, the method may further include the following steps.

Step 830: The edge enabler client sends an edge application server discovery request message to the first edge enabler server.

The edge application server discovery request message includes the identifier of the first edge application server, and may further include other content. For details, refer to step 301.

Step 840: The first edge enabler server sends an edge application server instantiation request message to the edge application server management system.

For example, the first edge enabler server queries for status information of a first edge application server discovery request message based on a received edge application server discovery request message, determines that the status information of the first edge application server discovery request message indicates that a status of the first edge application server is an instantiable but not yet instantiated state, and sends the edge application server instantiation request message to the edge application server management system.

Step 850: The edge application server management system sends an edge application server instantiation result to the first edge enabler server.

For example, the edge application server management system performs edge application server instantiation based on the received edge application server instantiation request message, and determines the edge application server instantiation result.

If the edge application server instantiation result indicates that instantiation of the first edge application server succeeds, the instantiation result includes information about the first edge application server.

If the edge application server instantiation result indicates that the instantiation of the first edge application server fails, the instantiation result further indicates a cause of the instantiation of the first edge application server failure.

Step 860: The first edge enabler server sends an edge application server discovery response message to the edge enabler client.

For example, if the edge application server instantiation result indicates that the instantiation of the first edge application server succeeds, the edge application server discovery response message includes the information about the first edge application server, and the procedure ends.

For example, if the edge application server instantiation result indicates that the instantiation of the first edge application server fails, the edge application server discovery response message indicates that first edge application server discovery fails. In addition, the edge application server discovery response message may further indicate a reason why the first edge application server discovery fails. For example, the instantiation of the first edge application server fails. Optionally, the edge enabler client continues to perform step 870.

Step 870: The edge enabler client sends indication information to the edge configuration server, where the indication information indicates that the instantiation of the first edge application server corresponding to the first edge enabler server fails.

Step 880: The edge configuration server sends information about one second edge enabler server other than the first edge enabler server to the edge enabler client, where a status of a first edge application server corresponding to the second edge enabler server is an instantiable but not yet instantiated state.

For example, the edge configuration server may determine the information about the one second edge enabler server other than the first edge enabler server based on the status information of the plurality of first edge application servers, or the edge configuration server may determine the information about the one second edge enabler server other than the first edge enabler server based on the status information of the plurality of first edge application servers other than the status information of the first edge application server corresponding to the first edge application enabler server.

For example, Table 2 is used as an example. If the identifier of the first edge application server is the EAS #2, the edge configuration server may determine status information of a plurality of EASs #2 based on the EAS #2 and Table 2, including: The status of the EAS #2 registered with the EES #1 is the instantiable but not yet instantiated state, the status of the EAS #2 registered with the EES #2 is the instantiable but not yet instantiated state, and the status of the EAS#2 registered with the EES#3 is the instantiable but not yet instantiated state. Further, the edge configuration server may determine one EES, for example, the EES#2, from the EES #1, the EES #2, and the EES #3 based on the AC configuration information, the location information of the terminal device, and the like. If the edge configuration server receives the indication information, and the indication information indicates that instantiation of the EAS #2 registered with the EES #2 fails, the edge configuration server may determine one EES, for example, the EES #3, from the EES #1 and the EES #3.

After the edge enabler client obtains the information about the second edge enabler server, the foregoing step 830 to step 860 may be repeated.

It should be noted that, in FIG. 9, only an example in which the edge configuration server receives the request message from the edge enabler client and sends the response message to the edge enabler client is used for description. In other words, FIG. 9 is described based on the first possible implementation of the foregoing two-level discovery mechanism of the EAS. It may be understood that, based on related descriptions of the second possible implementation of the two-level discovery mechanism of the EAS, the edge enabler client may be alternatively replaced with the source edge enabler server, and the first edge enabler server is replaced with a target edge enabler server.

Step 900: An edge configuration server receives a request message. The request message is used to request information about an edge enabler server, and the request message includes an identifier of a first edge application server.

For step 900, refer to related content of step 800. Details are not described herein again.

Step 910: The edge configuration server sends a response message. The response message includes information about at least one edge enabler server and status information of a first edge application server respectively corresponding to the at least one edge enabler server.

The status information of the first edge application server respectively corresponding to the at least one edge enabler server may also be described as status information of a first edge application server corresponding to each of the at least one edge enabler server.

For example, before the edge configuration server sends the response message, the edge configuration server may determine the at least one edge enabler server based on one or more of the foregoing reference bases. Further, the edge configuration server determines, from status information that is of first edge application servers separately corresponding to edge enabler servers and that is stored in the edge configuration server, the status information of the first edge application server respectively corresponding to the at least one edge enabler server.

The edge enabler server obtains status information of an edge application server registered with the edge enabler server in the foregoing two manners. Details are not described herein again. After the edge enabler server obtains the status information of the edge application server registered with the edge enabler server, the edge enabler server may send, to the edge configuration server, an identifier of the edge enabler server, an identifier of an edge application server registered with the edge enabler server, and status information of the edge application server registered with the edge enabler server. For example, the foregoing content may be carried in a registration request message or a registration update request message sent by the edge enabler server to the edge configuration server.

For example, Table 2 is used as an example. If the identifier of the first edge application server is an EAS #2, the edge configuration server may determine, based on Table 2, that the EES #1, the EES #2, and the EES #3 each are registered with an EAS#2. Further, the edge configuration server may determine an EES #1, an EES #2, and an EES #3 from the EES #1, the EES #2, and the EES #3 based on AC configuration information, location information of a terminal device, and the like. The edge configuration server sends a response message. The response message includes information about the EES#1, information about the EES#2, and information about the EES#3. The status of the EAS #2 registered with the EES #1 is the instantiable but not yet instantiated state, the status of the EAS #2 registered with the EES #2 is the instantiable but not yet instantiated state, and the status of the EAS#2 registered with the EES#3 is the instantiable but not yet instantiated state.

For example, Table 2 is used as an example. If the identifier of the first edge application server is an EAS #1, the edge configuration server may determine, based on Table 2, that the EES #1, the EES #2, and the EES #3 each are registered with an EAS#1. Further, the edge configuration server may determine an EES #1, an EES #2, and an EES #3 from the EES #1, the EES #2, and the EES #3 based on AC configuration information, location information of a terminal device, and the like. The edge configuration server sends a response message. The response message includes information about the EES#1, information about the EES#2, and information about the EES#3. The status of the EAS #1 registered with the EES #1 is the instantiated state, the status of the EAS #1 registered with the EES #2 is the instantiated state, and the status of the EAS#1 registered with the EES#3 is the instantiable but not yet instantiated state.

Step 920: The edge enabler client determines one first edge enabler server based on the status information of the first edge application server respectively corresponding to the at least one edge enabler server, where a status of the first edge application server corresponding to the first edge enabler server is an instantiable but not yet instantiated state.

For example, the edge enabler client may determine, based on the status information of the first edge application server respectively corresponding to the at least one edge enabler server, whether a first edge application server whose status is an instantiated state exists.

In a possible design, when the status information of the first edge application server respectively corresponding to the at least one edge enabler server includes that a status of the first edge application server is an instantiated state, the edge enabler client may select one or more edge enabler servers from one or more edge enabler servers corresponding to the first edge application server in the instantiated state.

For example, the response message includes the information about the EES #1, the information about the EES #2, and the information about the EES #3; and the status information of the EAS #1 registered with the EES #1 is the instantiated state, the status of the EAS #1 registered with the EES #2 is the instantiated state, and the status of the EAS #1 registered with the EES #3 is the instantiable but not yet instantiated state. Because the status of the EAS #1 registered with the EES #1 is the instantiated state, and the status of the EAS #1 registered with the EES #2 is the instantiated state, the edge enabler client may select the EES #1 and/or the EES #2.

In a possible design, when the status information of the first edge application server respectively corresponding to the at least one edge enabler server does not include that a status of the first edge application server is an instantiated state, the edge enabler client may select one edge enabler server from one or more edge enabler servers corresponding to the first edge application server in the instantiable but not yet instantiated state. In other words, before determining the one first edge enabler server based on the status information of the first edge application server respectively corresponding to the at least one edge enabler server, the edge enabler client determines, based on the status information of the first edge application server respectively corresponding to the at least one edge enabler server, that a first edge application server whose status is an instantiated state does not exist.

For example, the response message includes the information about the EES #1, the information about the EES #2, and the information about the EES #3; and the status of the EAS #2 registered with the EES #1 is the instantiable but not yet instantiated state, the status of the EAS #2 registered with the EES #2 is the instantiable but not yet instantiated state, and the status of the EAS #2 registered with the EES #3 is the instantiable but not yet instantiated state. In other words, in this case, status information of no EAS #2 is an instantiated state, and status information of each EAS #2 is an instantiable but not yet instantiated state. In this case, the edge enabler client may select one of the EES #1, the EES #2, and the EES #3.

In addition, when all the status information of the first edge application server respectively corresponding to the at least one edge enabler server is a not instantiable state, the edge enabler client determines that the edge enabler server discovery fails.

According to the foregoing design, the edge enabler client determines the one first edge enabler server based on the status information of the first edge application server respectively corresponding to the at least one edge enabler server. In other words, the edge configuration server selects only the one first edge enabler server, and the status of the first edge application server corresponding to the first edge enabler server is the instantiable but not yet instantiated state. Therefore, the edge configuration server may subsequently send only an edge application server discovery request message to the first edge enabler server. In this way, only the first edge application server on the first edge enabler server may be instantiated, but not all first edge enabler servers on a plurality of edge enabler servers may be instantiated, so that a problem of a waste of edge data network resources caused by instantiation of an unnecessary edge application server can be avoided.

Optionally, after the edge enabler client receives the response message, the method may further include the following steps.

For step 930 to step 960, refer to step 830 to step 860.

Step 970: When instantiation of the first edge application server corresponding to the first edge enabler server fails, the edge enabler client determines one second edge enabler server other than the first edge enabler server based on the status information of the first edge application server respectively corresponding to the at least one edge enabler server.

For example, the edge enabler client may determine one second edge enabler server other than the first edge enabler server based on status information of a first edge application server separately corresponding to an edge enabler server other than the first edge enabler server in the at least one edge enabler server.

A status of a first edge application server corresponding to the second edge enabler server is an instantiable but not yet instantiated state.

For example, the response message includes the information about the EES #1, the information about the EES #2, and the information about the EES #3; and the status of the EAS #2 registered with the EES #1 is the instantiable but not yet instantiated state, the status of the EAS #2 registered with the EES #2 is the instantiable but not yet instantiated state, and the status of the EAS #2 registered with the EES #3 is the instantiable but not yet instantiated state. The edge enabler client may select one of the EES #1, the EES #2, and the EES #3, for example, the EES #2. If it is determined that instantiation of the EAS #2 registered with the EES #2 fails, the edge enabler client may select one of the EES #1 and the EES #3, for example, the EES #1.

In current standard discussion, two solutions are available to resolve a problem of a resource waste in EAS instantiation:
Solution 1: Status information of an EAS is provided to an EEC in an EES discovery (also referred to as service provisioning) procedure. The EEC performs EES selection, and an EAS discovery request message triggers the EES to determine whether the EAS instantiation is needed.
Solution 2: The status information of the EAS is provided in an EAS discovery (EAS discovery) procedure. In this case, the EAS discovery request does not trigger the EES to determine whether the EAS instantiation is needed, but a new procedure (for example, an EAS selection request procedure may also be referred to as another procedure) is introduced to perform the EAS selection, and triggers, based on the new procedure, the EES to determine whether the EAS instantiation is needed.

From a perspective of EES performance, after the EES receives the EAS discovery request message, the differences are as follows:
In the solution 1, after receiving the EAS discovery request, the EES determines whether the EAS instantiation is needed. A determining process is as follows: If an instantiated EAS does not exist, the EES sends an EAS instantiation request message to an EAS management system based on information about at least one EAS that is instantiable but not yet instantiated. If the instantiated EAS exists, the EES does not need to send the EAS instantiation request message to the EAS management system.
In the solution 2, the EEC may separately send the EAS discovery request message to a plurality of EESs. For each EES, after the EES receives the EAS discovery request message, the EAS instantiation is not needed. In other words, the foregoing determining process does not need to be performed, but the EES sends the information about the at least one EAS that is instantiable but not yet instantiated to the EEC. Further, the EEC selects one EES from the plurality of EESs based on a plurality of EAS discovery response messages fed back by the plurality of EESs. If the EEC selects one EAS that is instantiable but not yet instantiated on the EES, the EEC notifies information about the EAS to the EES (namely, the foregoing new procedure). The EES sends the EAS instantiation request message to the EAS management system based on an EAS notified by the EEC, and the EAS instantiation request message includes the information about the EAS notified by the EEC.

It can be learned that, in the solution 1 and another existing solution, after the EES receives the EAS discovery request message, based on existing logic, the EES determines whether the EAS instantiation is needed. However, in the solution 2, the EES does not need the EAS instantiation. In other words, in the solution 2, an understanding of the EES about the EAS discovery request message is different from an understanding of the EES about the EAS discovery request message in the solution 1 (and another existing solution). To avoid that the EES cannot accurately understand the EAS discovery request message, the following provides three examples to resolve the problem.

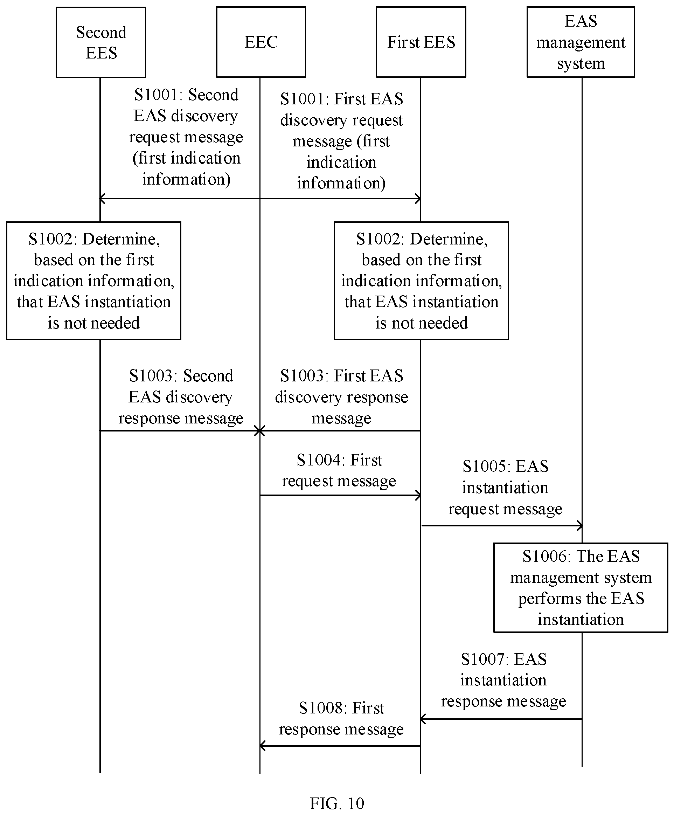

Example 1: as shown in FIG. 10.

S1001: An EEC sends a first EAS discovery request message to a first EES, and the EEC sends a second EAS discovery request message to a second EES.

The first EAS discovery request message includes first indication information, the first EAS discovery request message is used to request information about an EAS that meets a requirement of an AC on the first EES, the second EAS discovery request message includes the first indication information, and the second EAS discovery request message is used to request information about an EAS that meets a requirement of the AC on the second EES. The first indication information indicates that EAS instantiation is not needed.

For example, the EEC may send N EAS discovery request messages to N EESs. N is a positive integer. The N EESs are in a one-to-one correspondence with the N EAS discovery request messages.

Each EAS discovery request message includes the first indication information, and the first indication information indicates that the EAS instantiation is not needed. An i^{th} EAS discovery request message is used to request information about an EAS that meets a requirement of the AC on an i^{th} EES, where i is a positive integer, and i is less than or equal to N.

For example, each EAS discovery request message may further include an identifier of the EEC and a security credential, and may further include an EAS discovery filter. The EAS discovery filter is configured to retrieve information about a specific EAS or a specific type of EAS (for example, a game application program).

In FIG. 10, only an example in which a value of N is 2 and two EESs include the first EES and the second EES is used for description. It may be understood that the value of N may be greater than or equal to 3.

S1002: The first EES determines, based on the first indication information, that the EAS instantiation is not needed, and the second EES determines, based on the first indication, that the EAS instantiation is not needed.

For example, the first EES is used as an example. That the first EES does not need the EAS instantiation means that the first EES does not need to determine whether the EAS instantiation is needed or whether there is a requirement for the EAS instantiation. In other words, for an EAS that is instantiable but not yet instantiated, the first EES does not need to send an EAS instantiation request message to an EAS management system. For a meaning that the second EES does not need the EAS instantiation, refer to a meaning that the first EES does not need the EAS instantiation. Details are not described herein again.

S1003: The first EES sends a first EAS discovery response message to the EEC, and the second EES sends a second EAS discovery response message to the EEC.

The first EAS discovery response message includes information about at least one instantiated EAS registered with the first EES and information about at least one EAS that is instantiable but not yet instantiated and that is registered with the first EES, or information about at least one EAS that is instantiable but not yet instantiated and that is registered with the first EES.

The second EAS discovery response message includes information about at least one instantiated EAS registered with the second EES and information about at least one EAS that is instantiable but not yet instantiated and that is registered with the second EES, or information about at least one EAS that is instantiable but not yet instantiated and that is registered with the second EES.

For example, the N EESs send N EAS discovery response messages to the EEC.

The N EESs are in a one-to-one correspondence with the N EAS discovery response messages.

An i^{th} EAS discovery response message includes information about at least one EAS that is instantiable but not yet instantiated on an i^{th} EES. Alternatively, an i^{th} EAS discovery response message includes information about at least one instantiated EAS registered with an i^{th} EES and information about at least one EAS that is instantiable but not yet instantiated and that is registered with the i^{th} EES.

For example, the first EES is used as an example. After the first EES receives the first EAS discovery request message, the first EES may preferentially determine, based on the EAS discovery filter and location information of UE (for example, which may be obtained from a 3GPP core network), the information about the at least one instantiated EAS registered with the first EES. If it is found that no instantiated EAS is available, the information about the at least one EAS that is instantiable but not yet instantiated on the first EES may be determined.

Alternatively, the first EES may determine, based on the EAS discovery filter and the location information of the UE, the information about the at least one instantiated EAS registered with the first EES and the information about the at least one EAS that is instantiable but not yet instantiated and that is registered with the first EES, or the information about the at least one EAS that is instantiable but not yet instantiated and that is registered with the first EES.

In addition, if one EAS discovery response message does not include information about an EAS that is instantiable but not yet instantiated, and includes only information about at least one instantiated EAS, after the EEC receives the EAS discovery response message, the EEC may provide the information about the at least one instantiated EAS for the AC, and based on the received information about the at least one instantiated EAS, the AC routes application data traffic to one instantiated EAS thereof. Alternatively, the EEC selects one EAS from the information about the at least one instantiated EAS, and provides information about the selected EAS for the AC. The AC routes the application data traffic to the EAS based on the information about the EAS selected by the EEC.

The following uses only an example in which each EAS discovery response message includes the information about the at least one EAS that is instantiable but not yet instantiated, or each EAS discovery response message includes the information about the at least one instantiated EAS and the information about the at least one EAS that is instantiable but not yet instantiated for description.

S1004: If the EEC selects the first EAS on the first EES, the EEC sends a first request message to the first EES. The first request message includes information about the first EAS, and the first request message indicates the EEC to select the first EAS, that is, requests the first EES to trigger instantiation of the first EAS. The first EAS is one of at least one EAS that is instantiable but not yet instantiated on the first EES.

The first request message may also be referred to as an EAS selection request message. The EAS selection request message indicates an EAS selected by the EEC. The EAS selection request message may alternatively have another name. This is not limited in this application.

For example, the EEC selects the first EAS based on the first EAS discovery response message and the second EAS discovery response message, and determines an EES corresponding to the first EAS based on the information about the first EAS. Herein, only an example in which the EES corresponding to the first EAS is the first EES is used for description.

S1005: The first EES sends the EAS instantiation request message to the EAS management system based on the received first request message. The EAS instantiation request message includes the information about the first EAS.

S1006: The EAS management system performs the EAS instantiation.

S1007: The EAS management system sends an EAS instantiation response message to the first EES. The EAS instantiation response message includes an instantiation result of the first EAS.

The instantiation result of the first EAS indicates that instantiation of the first EAS succeeds or fails.

If the instantiation of the first EAS succeeds, the instantiation result of the first EAS further includes information about an instantiated first EAS, for example, a configuration file of the first EAS (EAS profile).

S1008: The first EES sends a first response message to the EEC.

The first response message includes the instantiation result of the first EAS.

Further, after receiving the first response message, if instantiation of the first EAS succeeds, the EEC provides the information about the instantiated first EAS for the AC, and the AC routes the application data traffic to the first EAS.

In addition, it should be noted that, if the EAS discovery request message does not include the first indication information, and the EES finds that no instantiated EAS is available, the EES sends the EAS instantiation request message to the EAS management system based on the information about the at least one EAS that is instantiable but not yet instantiated, that is, follows an existing procedure.

In the foregoing example 1, the EAS discovery request message includes the first indication information, so that a problem of the EES cannot accurately understand the EAS discovery request message after the EES receives the EAS discovery request message can be resolved. In addition, a problem of backward compatibility or compatibility of the EAS discovery request message for different systems can be further resolved.

In addition, in a conventional technology, if the EES finds that no instantiated EAS is available, the EES sends the EAS instantiation request message to the EAS management system based on the information about the at least one EAS that is instantiable but not yet instantiated. As a result, the EAS management system may instantiate a plurality of EASs. Actually, the AC or the EEC selects only one EAS. Therefore, a waste of network resources is caused.

However, in the foregoing example 1, in comparison with the conventional technology, the EES determines, based on the first indication information in the EAS discovery request message, that the EAS instantiation is not needed, so that the EES does not send the EAS instantiation request message to the EAS management system when receiving the EAS discovery request message. Therefore, the EAS discovery request message can be accurately understood. Further, because each of the plurality of EAS discovery response messages includes the information about the at least one EAS that is instantiable but not yet instantiated, the EEC may select an EAS that is instantiable but not yet instantiated, and notify the EES corresponding to the EAS. The EES requests the EAS management system to instantiate the EAS, so that the foregoing problem of a waste of network resources can be avoided.

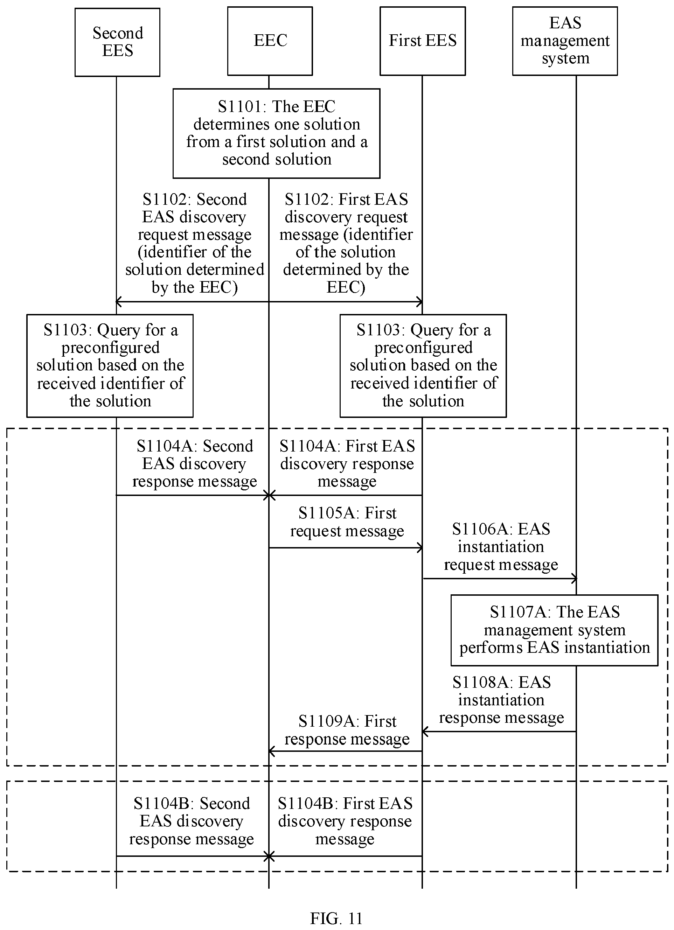

Example 2: as shown in FIG. 11.

S1101: An EEC determines one solution from a first solution and a second solution.

The first solution and the second solution are preconfigured solutions, and the first solution is that the EEC does not need EAS instantiation after receiving an EAS discovery request message.

The second solution is that an EES needs EAS instantiation after receiving an EAS discovery request message, or the EES needs to determine whether EAS instantiation is needed after receiving an EAS discovery request message. The second solution may also be described as follows: After receiving the EAS discovery request message, if the EES finds that no instantiated EAS is available, the EES sends an EAS instantiation request message to an EAS management system based on information about at least one EAS that is instantiable but not yet instantiated.

S1102: The EEC sends a first EAS discovery request message to a first EES, and the EEC sends a second EAS discovery request message to a second EES.

The first EAS discovery request message includes second indication information, and the second indication information includes an identifier of the solution determined by the EEC. The second EAS discovery request message includes the second indication information. The second indication information includes the identifier of the solution determined by the EEC. It may be understood that the two carry the same identifier of the solution.

S1103: The first EES queries for a preconfigured solution based on the received identifier of the solution. If an identifier of a solution included in the second indication information is the identifier of the first solution, S1104A is performed. If an identifier of a solution included in the second indication information is the identifier of the second solution, S1104B is performed. Similarly, the second EES queries for a preconfigured solution based on the received identifier of the solution. If an identifier of a solution included in the second indication information is the identifier of the first solution, S1104A is performed. If an identifier of a solution included in the second indication information is the identifier of the second solution, S1104B is performed.

Preconfigured solutions of each EES are the same as preconfigured solutions of the EEC, and include the first solution and the second solution.

S1104A: The first EES sends a first EAS discovery response message to the EEC. The second EES sends a second EAS discovery response message to the EEC.

The first EAS discovery response message includes information about at least one EAS that is instantiable but not yet instantiated on the first EES, or information about at least one instantiated EAS registered with the first EES and information about at least one EAS that is instantiable but not yet instantiated and that is registered with the first EES. The second EAS discovery response message includes information about at least one EAS that is instantiable but not yet instantiated on the second EES, or information about at least one instantiated EAS registered with the second EES and information about at least one EAS that is instantiable but not yet instantiated and that is registered with the second EES.

For S1104A, refer to S1003. Details are not described herein again.

For S1105A to S1109A, refer to S1004 to S1008. Details are not described herein again.

S1104B: The first EES sends the first EAS discovery response message to the EEC. The second EES sends the second EAS discovery response message to the EEC.

The first EAS discovery response message includes the information about the at least one instantiated EAS registered with the first EES. The second EAS discovery response message includes the information about the at least one instantiated EAS registered with the second EES.

For example, the first EES is used as an example. The first EES may preferentially determine, based on an EAS discovery filter and location information of UE (for example, which may be obtained from a 3GPP core network), the information about the at least one instantiated EAS registered with the first EES. If it is found that no instantiated EAS is available, the information about the at least one EAS that is instantiable but not yet instantiated on the first EES may be determined. Further, the first EES sends an EAS instantiation request message to the EAS management system based on the information about the at least one EAS that is instantiable but not yet instantiated on the first EES. Therefore, in this case, the first EAS discovery response message includes only the information about the at least one instantiated EAS registered with the first EES.

Further, after the EEC receives the first EAS discovery response message and the second EAS discovery response message in S1104B, the EEC provides, for the AC, the information about the at least one instantiated EAS registered with the first EES, and the AC routes the application data traffic to one of the at least one instantiated EAS based on the received information about the at least one instantiated EAS. Alternatively, the EEC determines one EAS from the information about the at least one instantiated EAS registered with the first EES, and provides information about the EAS for the AC. The AC routes the application data traffic to the EAS based on the information about the EAS.

In the foregoing example 2, the EEC and the EES may preconfigure a plurality of solutions. The EEC selects one solution from the plurality of preconfigured solutions, and includes an identifier of the solution in the EAS discovery request message. The EES can accurately understand the EAS discovery request message based on the identifier of the solution in the received EAS discovery request message. In addition, a problem of backward compatibility or compatibility of the EAS discovery request message for different systems can be further resolved.

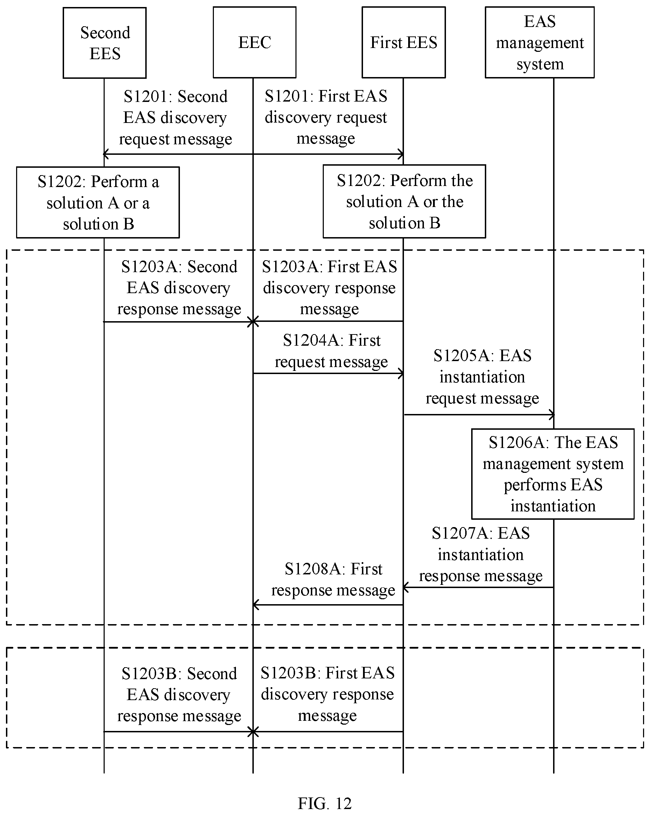

Example 3: as shown in FIG. 12.

S1201: An EEC sends a first EAS discovery request message to a first EES, and the EEC sends a second EAS discovery request message to a second EES.

S1202: After the first EES receives the first EAS discovery request message, the first EES performs a solution A or a solution B.

Solution A: The first EES determines, based on EES configuration information, that the EES configuration information does not include status information of an EAS. In addition, the first EES supports an EAS selection procedure (namely, a new procedure), and the first EES does not need EAS instantiation. The EES configuration information may be an EES profile. The status information of the EAS may also be referred to as instantiation status information of the EAS. The status information of the EAS includes an instantiated state, or an instantiable but not yet instantiated state.

Solution B: The first EES determines, based on the EES configuration information, that the EES configuration information includes the status information of the EAS, and the first EES determines whether the EAS instantiation is needed.

In addition to the foregoing solution A and solution B, another solution may be included. This is not limited in this application.

An operation performed by the second EES is similar to an operation performed by the first EES. Details are not described herein again.

If the first EES does not need the EAS instantiation, S1203A is performed. If the first EES determines whether the EAS instantiation is needed, S1203B is performed. Similarly, if the second EES does not need the EAS instantiation, S1203A is performed. If the second EES determines whether the EAS instantiation is needed, S1203B is performed.

S1203A: The first EES sends a first EAS discovery response message to the EEC. The second EES sends a second EAS discovery response message to the EEC.

The first EAS discovery response message includes information about at least one EAS that is instantiable but not yet instantiated on the first EES, or information about at least one instantiated EAS registered with the first EES and information about at least one EAS that is instantiable but not yet instantiated and that is registered with the first EES. The second EAS discovery response message includes information about at least one EAS that is instantiable but not yet instantiated on the second EES, or information about at least one instantiated EAS registered with the second EES and the information about the at least one EAS that is instantiable but not yet instantiated and that is registered with the first EES.

For S1203A, refer to S1003. Details are not described herein again.

For S1204A to S1208A, refer to S1004 to S1008. Details are not described herein again.

S1203B: The first EES sends the first EAS discovery response message to the EEC. The second EES sends the second EAS discovery response message to the EEC.

The first EAS discovery response message includes the information about the at least one instantiated EAS registered with the first EES. The second EAS discovery response message includes the information about the at least one instantiated EAS registered with the second EES.

For S1203B, refer to S1104B. Details are not described herein again.

In the foregoing example 2, when receiving the EAS discovery request message, the EES understands the EAS discovery request message with reference to capability information about the EES and whether the EES configuration information includes information about the EAS. In other words, a problem of the EES cannot accurately understand the EAS discovery request message after the EES receives the EAS discovery request message can be resolved. In addition, a problem of backward compatibility or compatibility of the EAS discovery request message for different systems can be further resolved.

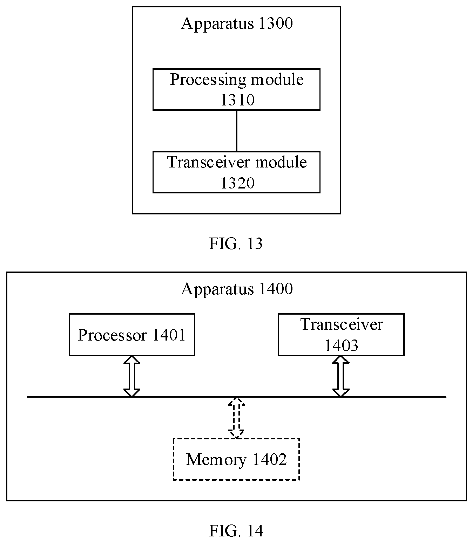

FIG. 13 is a possible example block diagram of a communication apparatus according to an embodiment of this application. The apparatus 1300 includes a transceiver module 1320 and a processing module 1310. The transceiver module 1320 may include a receiving unit and a sending unit. The processing module 1310 is configured to control and manage an action of the apparatus 1300. The transceiver module 1320 is configured to support the apparatus 1300 in communicating with another network entity. Optionally, the apparatus 1300 may further include a storage unit, and the storage unit is configured to store program code and data of the apparatus 1300.

Optionally, each module in the apparatus 1300 may be implemented by using software.

Optionally, the processing module 1310 may be a processor or a controller, for example, may be a general-purpose central processing unit (central processing unit, CPU), a general-purpose processor, a digital signal processor (digital signal processing, DSP), an application specific integrated circuit (application specific integrated circuits, ASIC), a field programmable gate array (field programmable gate array, FPGA) or another programmable logic device, a transistor logic device, a hardware component, or any combination thereof. The controller/processor may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver module 1320 may be a communication interface, a transceiver, a transceiver circuit, or the like. The communication interface is a general term. In specific implementation, the communication interface may include a plurality of interfaces, and the storage unit may be a memory.

When the apparatus 1300 is an edge configuration server or a chip in an edge configuration server, the processing module 1310 in the apparatus 1300 may support the apparatus 1300 in performing an action of the edge configuration server in the foregoing method examples, for example, may support the apparatus 1300 in performing step 810 in FIG. 8.

The transceiver module 1320 may support the apparatus 1300 in communicating with an edge enabler client or a source edge enabler server. For example, the transceiver module 1320 may support the apparatus 1300 in performing step 800, step 820, step 870, step 880 in FIG. 8, or step 900, or step 910 in FIG. 9.

For example, the transceiver module 1320 is configured to receive a request message. The request message is used to request information about an edge enabler server, and the request message includes an identifier of a first edge application server.

The processing module 1310 is configured to determine one first edge enabler server based on status information of a plurality of first edge application servers, where a status of a first edge application server corresponding to the first edge enabler server is an instantiable but not yet instantiated state.

The transceiver module 1320 is configured to send a response message, and the response message includes information about the first edge enabler server.

In a possible design, the status information of the first edge application server indicates that a status of the first edge application server is an instantiated state or an instantiable but not yet instantiated state.

In a possible design, the processing module 1310 is configured to obtain the status information of the plurality of first edge application servers from a plurality of edge enabler servers.

In a possible design, the processing module 1310 is configured to: before determining one first edge enabler server based on the status information of the plurality of first edge application servers, determine, based on the status information of the plurality of first edge application servers, that a first edge application server whose status is an instantiated state does not exist.

In a possible design, the transceiver module 1320 is configured: to receive indication information, where the indication information indicates that instantiation of a first edge application server corresponding to the first edge enabler server fails; and send information about one second edge enabler server other than the first edge enabler server, where a status of a first edge application server corresponding to the second edge enabler server is an instantiable but not yet instantiated state.

In a possible design, the transceiver module 1320 is configured to: when receiving the request message, receive the request message from the edge enabler client; and when sending the response message, send the response message to the edge enabler client.

In a possible design, the transceiver module is configured to: when receiving the request message, receive the request message from the source edge enabler server, and when sending the response message, send the response message to the source edge enabler server.

For another example, the processing module 1310 invokes the transceiver module 1320 to: receive the request message, where the request message is used to request the information about the edge enabler server, and the request message includes an identifier of the first edge application server; and send the response message, where the response message includes information about at least one edge enabler server and status information of a first edge application server respectively corresponding to the at least one edge enabler server.

In a possible design, the status information of the first edge application server indicates that a status of the first edge application server is an instantiated state or an instantiable but not yet instantiated state.

In a possible design, the transceiver module 1320 is configured to: when receiving the request message, receive the request message from the edge enabler client; and when sending the response message, send the response message to the edge enabler client.

In a possible design, the transceiver module 1320 is configured to: when receiving the request message, receive the request message from the source edge enabler server; and when sending the response message, send the response message to the source edge enabler server.

It should be understood that the apparatus 1300 according to this embodiment of this application may correspond to the edge configuration server in the foregoing method embodiments, and operations and/or functions of the modules in the apparatus 1300 are separately intended to implement corresponding steps of the methods of the edge configuration server in the foregoing method embodiments. Therefore, the beneficial effects in the foregoing method embodiments can also be implemented. For brevity, details are not described herein again.

When the apparatus 1300 is the edge enabler client or the source edge enabler server or a chip in the edge enabler client or a chip in the source edge enabler server, the processing module 1310 in the apparatus 1300 may support the apparatus 1300 in performing an action of the edge enabler client or the source edge enabler server in the foregoing method examples. For example, the processing module 1310 may support the apparatus 1300 in performing step 920 or step 970 in FIG. 9.

The transceiver module 1320 may support the apparatus 1300 in communicating with the edge configuration server. For example, the transceiver module 1320 may support the apparatus 1300 in performing step 800, step 820, step 830, step 860, step 870, or step 880 in FIG. 8, or step 900, step 910, step 930, or step 960 in FIG. 9.

For example, the transceiver module 1320 is configured to: send the request message to an edge configuration server, where request message is used to request the information about the edge enabler server, and the request message includes the identifier of the first edge application server; and receive the response message from the edge configuration server, where the response message includes the information about the at least one edge enabler server and the status information of the first edge application server respectively corresponding to the at least one edge enabler server.

The processing module 1310 is configured to determine one first edge enabler server based on the status information of the first edge application server respectively corresponding to the at least one edge enabler server, where a status of the first edge application server corresponding to the first edge enabler server is an instantiable but not yet instantiated state.

In a possible design, the status information of the first edge application server indicates that the first edge application server is in an instantiated state or is in an instantiable but not yet instantiated state.

In a possible design, before determining one first edge enabler server based on the status information of the first edge application server respectively corresponding to the at least one edge enabler server, the processing module 1310 is configured to determine, based on the status information of the first edge application server respectively corresponding to the at least one edge enabler server, that a first edge application server whose status is an instantiated state does not exist.

In a possible design, the processing module 1310 is configured to: when instantiation of the first edge application server corresponding to the first edge enabler server fails, determine, based on the status information of the first edge application server respectively corresponding to the at least one edge enabler server, one second edge enabler server other than the first edge enabler server, where a status of a first edge application server corresponding to the second edge enabler server is an instantiable but not yet instantiated state.

It should be understood that the apparatus 1300 according to this embodiment of this application may correspond to the edge enabler client or the source edge enabler server in the foregoing method embodiment, and operations and/or functions of modules in the apparatus 1300 are separately intended to implement corresponding steps of the method of the edge enabler client or the source edge enabler server in the foregoing method embodiment. Therefore, the beneficial effects in the foregoing method embodiments can also be implemented. For brevity, details are not described herein again.

When the apparatus 1300 is the edge enabler server or a chip in the edge enabler server, the processing module 1310 in the apparatus 1300 may support the apparatus 1300 in performing the edge enabler server in the foregoing method examples.

The transceiver module 1320 may support the apparatus 1300 in communicating with the edge configuration server.

For example, the processing module 1310 invokes the transceiver module 1320 to: obtain status information of a first edge application server; and send an identifier of the first edge application server and the status information of the first edge application server to an edge configuration server.

In a possible design, the transceiver module 1320 is configured to: when obtaining the status information of the first edge application server, obtain the status information of the first edge application server from the first edge application server, where the status information of the first edge application server indicates that the status of the first edge application server is an instantiation status.

In a possible design, the transceiver module 1320 is configured to: when obtaining the status information of the first edge application server, obtain the status information of the first edge application server from an edge application server management system, where the status information of the first edge application server indicates that the first edge application server is in an instantiable but not yet instantiated state.

It should be understood that the apparatus 1300 according to this embodiment of this application may correspond to the edge enabler server in the foregoing method embodiments, and operations and/or functions of the modules in the apparatus 1300 are separately configured to implement corresponding steps of the methods of the edge enabler server in the foregoing method embodiments. Therefore, the beneficial effects in the foregoing method embodiments can also be implemented. For brevity, details are not described herein again.

FIG. 14 is a schematic diagram of a structure of a communication apparatus 1400 according to an embodiment of this application. As shown in FIG. 14, the apparatus 1400 includes a processor 1401.

When the apparatus 1400 is an edge configuration server or a chip in an edge configuration server, in a possible implementation, when the processor 1401 is configured to invoke an interface to perform the following actions: receiving a request message, where the request message is used to request information about an edge enabler server, and the request message includes an identifier of a first edge application server; determining one first edge enabler server based on status information of a plurality of first edge application servers, where a status of a first edge application server corresponding to the first edge enabler server is an instantiable but not yet instantiated state; and sending a response message, where the response message includes information about the first edge enabler server.

In another possible implementation, when the processor 1401 is configured to invoke an interface to perform the following actions: receiving a request message, where the request message is used to request information about an edge enabler server, and the request message includes an identifier of a first edge application server; determining one first edge enabler server based on status information of a plurality of first edge application servers, where a status of a first edge application server corresponding to the first edge enabler server is an instantiable but not yet instantiated state; and sending a response message, where the response message includes information about the first edge enabler server.

It should be understood that the apparatus 1400 may be further configured to perform other steps and/or operations on the edge configuration server side in the foregoing embodiments. For brevity, details are not described herein again.

When the apparatus 1400 is an edge enabler client, a source edge enabler server, a chip in an edge enabler client, or a chip in a source edge enabler server, in a possible implementation, the processor 1401 is configured to invoke an interface to perform the following action: sending a request message to an edge configuration server, where the request message is used to request information about an edge enabler server and the request message includes an identifier of the first edge application server; receiving a response message from the edge configuration server, where the response message includes information about at least one edge enabler server and status information of a first edge application server respectively corresponding to the at least one edge enabler server; and determining one first edge enabler server based on the status information of the first edge application server respectively corresponding to the at least one edge enabler server, where a status of a first edge application server corresponding to the first edge enabler server is an instantiable but not yet instantiated state.

It should be understood that the apparatus 1400 may be further configured to perform other steps and/or operations on the edge enabler client or the source edge enabler server side in the foregoing embodiments. For brevity, details are not described herein again.

When the apparatus 1400 is an edge enabler server or a chip in an edge enabler server, in a possible implementation, when the processor 1401 is configured to invoke an interface to perform the following actions: obtaining status information of a first edge application server; and sending an identifier of the first edge application server and status information of the first edge application server to the edge configuration server.

It should be understood that the apparatus 1400 may be further configured to perform other steps and/or operations on the edge enabler server side in the foregoing embodiments. For brevity, details are not described herein again.

It should be understood that the processor 1401 may invoke the interface to perform the foregoing receiving and sending actions. The invoked interface may be a logical interface or a physical interface. This is not limited. Optionally, the physical interface may be implemented by using a transceiver. Optionally, the apparatus 1400 further includes the transceiver 1403.

Optionally, the apparatus 1400 further includes the memory 1402, and the memory 1402 may store program code in the foregoing method embodiments, so that the processor 1401 invokes the program code.

Specifically, if the apparatus 1400 includes the processor 1401, the memory 1402, and the transceiver 1403, the processor 1401, the memory 1402, and the transceiver 1403 communicate with each other through an inner connection path, to transmit a control signal and/or a data signal. In a possible design, the processor 1401, the memory 1402, and the transceiver 1403 may be implemented by using a chip. The processor 1401, the memory 1402, and the transceiver 1403 may be implemented in a same chip, or may be separately implemented in different chips, or functions of any two of the processor 1401, the memory 1402, and the transceiver 1403 are implemented in one chip. The memory 1402 may store the program code, and the processor 1401 invokes the program code stored in the memory 1402, to implement a corresponding function of the apparatus 1400.

This application further provides a communication system. The system includes one or more of an application client, an edge enabler client, an edge enabler server, an edge configuration server, an edge application server, and an edge application server management system. The edge enabler client is configured to perform the steps and/or operations on the edge enabler client side in the foregoing embodiments, the edge enabler server is configured to perform the steps and/or operations on the edge enabler server side in the foregoing embodiments, the edge configuration server is configured to perform the steps and/or operations on the edge configuration server side in the foregoing embodiments, and the edge application server management system is configured to perform the steps and/or operations on the edge application server management system side in the foregoing embodiments.

The methods disclosed in embodiments of this application may be applied to a processor or may be implemented by a processor. The processor may be an integrated circuit chip with a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or may be a system on chip (system on chip, SoC), or may be a central processing unit (central processor unit, CPU), or may be a network processor (network processor, NP), or may be a digital signal processing circuit (digital signal processor, DSP), or may be a micro control unit (micro controller unit, MCU), or may be a programmable controller (programmable logic device, PLD) or another integrated chip. The processor may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

It should be understood that, in embodiments of this application, numbers "first", "second", and the like are merely intended to distinguish between different objects, for example, to distinguish between different parameter information or messages, and do not constitute a limitation on the scope of embodiments of this application. This embodiment of this application is not limited thereto.

It should be further understood that sequence numbers of the foregoing processes do not mean execution sequences in embodiments of this application. The execution sequences of the processes should be determined based on functions and internal logic of the processes. Various numbers or sequence numbers in the foregoing processes are merely for differentiation for ease of description, and shall not constitute any limitation on an implementation process of embodiments of this application.

It should also be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it is not considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in one computer-readable storage medium. Based on such an understanding, the technical solutions of this application essentially, or the part contributing to the conventional technology, or some of the technical solutions may be implemented in a form of a software product. The computer software product is stored in one storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

## Claims

1. A communication method, wherein the method comprises:
sending (900) a request message to an edge configuration server, wherein the request message is used to request information about an edge enabler server;
receiving (910) a response message from the edge configuration server, wherein the response message comprises information about at least one edge enabler server and status information of a first edge application server respectively corresponding to the at least one edge enabler server, wherein the status information of the first edge application server indicates that a status of the first edge application server is an instantiated state or an instantiable but not yet instantiated state; and
determining (920) one or more first edge enabler servers based on the status information of the first edge application server respectively corresponding to the at least one edge enabler server.

2. The method according to claim 1, wherein the determining (920) one or more first edge enabler server based on the status information of the first edge application server respectively corresponding to the at least one edge enabler server comprises:
when a first edge application server whose status is an instantiated state exists, selecting one or more edge enabler servers from one or more edge enabler servers corresponding to the first edge application server in the instantiated state.

3. The method according to claim 1, wherein the determining (920) one or more first edge enabler server based on the status information of the first edge application server respectively corresponding to the at least one edge enabler server comprises:
when a first edge application server whose status is an instantiated state does not exist, selecting one edge enabler server from one or more edge enabler servers corresponding to the first edge application server in the instantiable but not yet instantiated state.

4. The method according to claim 2 or 3, wherein before the determining (920) one or more first edge enabler servers based on the status information of the first edge application server respectively corresponding to the at least one edge enabler server, the method further comprises:
determining, based on the status information of the first edge application server respectively corresponding to the at least one edge enabler server, whether a first edge application server whose status is an instantiated state exists.

5. The method according to claim 3 or 4, further comprising:
when instantiation of the first edge application server corresponding to the first edge enabler server fails, determining, based on the status information of the first edge application server respectively corresponding to the at least one edge enabler server, one second edge enabler server other than the first edge enabler server, wherein a status of a first edge application server corresponding to the second edge enabler server is an instantiable but not yet instantiated state.

6. The method according to claim 3, wherein after the determining one first edge enabler server, the method further comprises: sending an edge application server discovery request message to the one first edge enabler server.

7. The method of any one of claims 1 to 6, wherein the method is performed by an edge enabler client.

8. A communication method, wherein the method comprises:
receiving (900) , by an edge configuration server, a request message, wherein the request message is used to request information about an edge enabler server; and
sending (910), by the edge configuration server, a response message, wherein the response message comprises information about at least one edge enabler server and status information of a first edge application server respectively corresponding to the at least one edge enabler server, a status of a first edge application server corresponding to one first edge enabler server in the at least one edge enabler server is an instantiable but not yet instantiated state,
wherein the status information of the first edge application server respectively corresponding to the at least one edge enabler server indicates that a status of the first edge application server is an instantiated state or an instantiable but not yet instantiated state; and the status information of the first edge application server respectively corresponding to the at least one edge enabler server is for determining one or more first edge enabler servers.

9. The method according to claim 8,
wherein the receiving (900), by an edge configuration server, a request message comprises: receiving, by the edge configuration server, the request message from an edge enabler client; and the sending, by the edge configuration server, a response message comprises: sending, by the edge configuration server, the response message to the edge enabler client; or
wherein the receiving (910), by an edge configuration server, a request message comprises: receiving, by the edge configuration server, the request message from a source edge enabler server; and the sending, by the edge configuration server, a response message comprises: sending, by the edge configuration server, the response message to the source edge enabler server.

10. The method according to any one of claims 1 to 9, wherein the request message comprises an identifier of the first edge application server.

11. The method according to any one of claims 1 to 10, wherein the request message is an edge enabler server discovery request message, and the response message is an edge enabler server discovery response message.

12. A communication method comprising: the method according to any one of claims 1 to 7; and the method according to any one of claims 8 to 11.

13. The method according to claim 12, further comprising:
obtaining, by an edge enabler server, status information of a first edge application server corresponding to the edge enabler server, wherein the edge enabler server is one of the at least one edge enabler server;
sending, by the edge enabler server, an identifier of the edge enabler server, the status information of the first edge application server corresponding to the edge enabler server, and an identifier of the first edge application server corresponding to the edge enabler server to the edge configuration server; and
receiving, by the edge configuration server, the identifier of the edge enabler server, the status information of the first edge application server corresponding to the edge enabler server and the identifier of the first edge application server corresponding to the edge enabler server that are sent by the edge enabler server.

14. The method according to claim 13, wherein the identifier of the edge enabler server, the status information of the first edge application server corresponding to the edge enabler server, and the identifier of the first edge application server corresponding to the edge enabler server are carried in a registration request message or a registration update request message that is sent by the edge enabler server to the edge configuration server.

15. A communication apparatus (1300, 1400), comprising a unit or a module configured to perform the method according to any one of claims 1 to 11.

16. A computer-readable storage medium, wherein the storage medium stores a computer program or instructions, and when the computer program or the instructions are executed by a communication apparatus, the method according to any one of claims 1 to 11 is implemented.

17. A communication system, wherein the communication system comprises at least two apparatuses of an edge configuration server, an edge enabler client, and an edge enabler server, wherein the edge configuration server is configured to perform the method according to any one of claims 8 to 9, the edge enabler client is configured to perform the method according to any one of claims 1 to 7, and the edge enabler server is configured to perform the method according to any one of claim 13 or 14.

18. A chip system, wherein the chip system comprises at least one chip and a memory, and the at least one chip is configured to read and execute a program stored in the memory, to implement the method according to any one of claims 1 to 7 or claims 8 to 14.

## Patentansprüche

1. Kommunikationsverfahren, wobei das Verfahren Folgendes umfasst:
Senden (900) einer Anforderungsnachricht an einen Edge-Konfigurationsserver, wobei die Anforderungsnachricht dazu verwendet wird, Informationen über einen Edge-Enabler-Server anzufordern;
Empfangen (910) einer Antwortnachricht von dem Edge-Konfigurationsserver, wobei die Antwortnachricht Informationen über mindestens einen Edge-Enabler-Server und Statusinformationen eines ersten Edge-Anwendungsservers umfasst, der jeweils dem mindestens einen Edge-Enabler-Server entspricht, wobei die Statusinformationen des ersten Edge-Anwendungsservers angeben, dass ein Status des ersten Edge-Anwendungsservers ein instanziierter Status oder ein instanziierbarer, aber noch nicht instanziierter Status ist; und Bestimmen (920) eines oder mehrerer erster Edge-Enabler-Server basierend auf den Statusinformationen des ersten Edge-Anwendungsservers, der jeweils dem mindestens einen Edge-Enabler-Server entspricht.

2. Verfahren nach Anspruch 1, wobei das Bestimmen (920) eines oder mehrerer erster Edge-Enabler-Server basierend auf den Statusinformationen des ersten Edge-Anwendungsservers, der jeweils dem mindestens einen Edge-Enabler-Server entspricht, Folgendes umfasst:
wenn ein erster Edge-Anwendungsserver existiert, dessen Status instanziiert ist, Auswählen eines oder mehrerer Edge-Enabler-Server aus einem oder mehreren Edge-Enabler-Servern, die dem ersten Edge-Anwendungsserver in dem instanziierten Status entsprechen.

3. Verfahren nach Anspruch 1, wobei das Bestimmen (920) eines oder mehrerer erster Edge-Enabler-Server basierend auf den Statusinformationen des ersten Edge-Anwendungsservers, der jeweils dem mindestens einen Edge-Enabler-Server entspricht, Folgendes umfasst:
wenn kein erster Edge-Anwendungsserver existiert, dessen Status instanziiert ist, Auswählen eines Edge-Enabler-Servers aus einem oder mehreren Edge-Enabler-Servern, die dem ersten Edge-Anwendungsserver in dem instanziierbaren, aber noch nicht instanziierten Status entsprechen.

4. Verfahren nach Anspruch 2 oder 3, wobei das Verfahren vor dem Bestimmen (920) eines oder mehrerer erster Edge-Enabler-Server basierend auf den Statusinformationen des ersten Edge-Anwendungsservers, der jeweils dem mindestens einen Edge-Enabler-Server entspricht, ferner Folgendes umfasst:
Bestimmen, basierend auf den Statusinformationen des ersten Edge-Anwendungsservers, der jeweils dem mindestens einen Edge-Enabler-Server entspricht, ob ein erster Edge-Anwendungsserver existiert, dessen Status ein instanziierter Status ist.

5. Verfahren nach Anspruch 3 oder 4, ferner umfassend:
wenn die Instanziierung des ersten Edge-Anwendungsservers, der dem ersten Edge-Enabler-Server entspricht, fehlschlägt, Bestimmen, basierend auf den Statusinformationen des ersten Edge-Anwendungsservers, der jeweils dem mindestens einen Edge-Enabler-Server entspricht, eines zweiten Edge-Enabler-Servers, der nicht der erste Edge-Enabler-Server ist, wobei ein Status eines ersten Edge-Anwendungsservers, der dem zweiten Edge-Enabler-Server entspricht, ein instanziierbarer, aber noch nicht instanziierter Status ist.

6. Verfahren nach Anspruch 3, wobei das Verfahren nach dem Bestimmen eines ersten Edge-Enabler-Servers ferner Folgendes umfasst: Senden einer Edge-Anwendungsserver-Erkennungsanforderungsnachricht an den einen ersten Edge-Enabler-Server.

7. Verfahren nach einem der Ansprüche 1 bis 6, wobei das Verfahren durch einen Edge-Enabler-Client durchgeführt wird.

8. Kommunikationsverfahren, wobei das Verfahren Folgendes umfasst:
Empfangen (900), durch einen Edge-Konfigurationsserver, einer Anforderungsnachricht, wobei die Anforderungsnachricht dazu verwendet wird, Informationen über einen Edge-Enabler-Server anzufordern; und
Senden (910), durch den Edge-Konfigurationsserver, einer Antwortnachricht, wobei die Antwortnachricht Informationen über mindestens einen Edge-Enabler-Server und Statusinformationen eines ersten Edge-Anwendungsservers, der jeweils dem mindestens einen Edge-Enabler-Server entspricht, umfasst, wobei ein Status eines ersten Edge-Anwendungsservers, der einem ersten Edge-Enabler-Server unter dem mindestens einen Edge-Enabler-Server entspricht, ein instanziierbarer, aber noch nicht instanziierter Status ist,
wobei die Statusinformationen des ersten Edge-Anwendungsservers, der jeweils dem mindestens einen Edge-Enabler-Server entspricht, angeben, dass ein Status des ersten Edge-Anwendungsservers ein instanziierter Status oder ein instanziierbarer, aber noch nicht instanziierter Status ist; und die Statusinformationen des ersten Edge-Anwendungsservers, der jeweils dem mindestens einen Edge-Enabler-Server entspricht, zum Bestimmen eines oder mehrerer erster Edge-Enabler-Server dienen.

9. Verfahren nach Anspruch 8,
wobei das Empfangen (900), durch einen Edge-Konfigurationsserver, einer Anforderungsnachricht Folgendes umfasst: Empfangen, durch den Edge-Konfigurationsserver, der Anforderungsnachricht von einem Edge-Enabler-Client; und das Senden, durch den Edge-Konfigurationsserver, einer Antwortnachricht Folgendes umfasst: Senden, durch den Edge-Konfigurationsserver, der Antwortnachricht an den Edge-Enabler-Client; oder
wobei das Empfangen (910), durch einen Edge-Konfigurationsserver, einer Anforderungsnachricht Folgendes umfasst: Empfangen, durch den Edge-Konfigurationsserver, der Anforderungsnachricht von einem Quellen-Edge-Enabler-Server; und das Senden, durch den Edge-Konfigurationsserver, einer Antwortnachricht Folgendes umfasst: Senden, durch den Edge-Konfigurationsserver, der Antwortnachricht an den Quellen-Edge-Enabler-Server.

10. Verfahren nach einem der Ansprüche 1 bis 9, wobei die Anforderungsnachricht eine Kennung des ersten Edge-Anwendungsservers umfasst.

11. Verfahren nach einem der Ansprüche 1 bis 10, wobei die Anforderungsnachricht eine Edge-Enabler-Server-Erkennungsanforderungsnachricht ist und die Antwortnachricht eine Edge-Enabler-Server-Erkennungsantwortnachricht ist.

12. Kommunikationsverfahren, umfassend: das Verfahren nach einem der Ansprüche 1 bis 7; und das Verfahren nach einem der Ansprüche 8 bis 11.

13. Verfahren nach Anspruch 12, ferner umfassend:
Erlangen, durch einen Edge-Enabler-Server, von Statusinformationen eines ersten Edge-Anwendungsservers, der dem Edge-Enabler-Server entspricht, wobei der Edge-Enabler-Server einer des mindestens einen Edge-Enabler-Servers ist;
Senden, durch den Edge-Enabler-Server, einer Kennung des Edge-Enabler-Servers, der Statusinformationen des ersten Edge-Anwendungsservers, der dem Edge-Enabler-Server entspricht, und einer Kennung des ersten Edge-Anwendungsservers, der dem Edge-Enabler-Server entspricht, an den Edge-Konfigurationsserver; und
Empfangen, durch den Edge-Konfigurationsserver, der Kennung des Edge-Enabler-Servers, der Statusinformationen des ersten Edge-Anwendungsservers, der dem Edge-Enabler-Server entspricht, und der Kennung des ersten Edge-Anwendungsservers, der dem Edge-Enabler-Server entspricht, die durch den Edge-Enabler-Server gesendet werden.

14. Verfahren nach Anspruch 13, wobei die Kennung des Edge-Enabler-Servers, die Statusinformationen des ersten Edge-Anwendungsservers, der dem Edge-Enabler-Server entspricht, und die Kennung des ersten Edge-Anwendungsservers, der dem Edge-Enabler-Server entspricht, in einer Registrierungsanforderungsnachricht oder einer Registrierungsaktualisierungsanforderungsnachricht enthalten sind, die durch den Edge-Enabler-Server an den Edge-Konfigurationsserver gesendet wird.

15. Kommunikationsvorrichtung (1300, 1400), umfassend eine Einheit oder ein Modul, die/das dazu konfiguriert ist, das Verfahren nach einem der Ansprüche 1 bis 11 durchzuführen.

16. Computerlesbares Speichermedium, wobei das Speichermedium ein Computerprogramm oder Anweisungen speichert und, wenn das Computerprogramm oder die Anweisungen durch eine Kommunikationsvorrichtung ausgeführt werden, das Verfahren nach einem der Ansprüche 1 bis 11 umgesetzt wird.

17. Kommunikationssystem, wobei das Kommunikationssystem mindestens zwei Vorrichtungen eines Edge-Konfigurationsservers, eines Edge-Enabler-Clients und eines Edge-Enabler-Servers umfasst, wobei der Edge-Konfigurationsserver dazu konfiguriert ist, das Verfahren nach einem der Ansprüche 8 bis 9 durchzuführen, der Edge-Enabler-Client dazu konfiguriert ist, das Verfahren nach einem der Ansprüche 1 bis 7 durchzuführen, und der Edge-Enabler-Server dazu konfiguriert ist, das Verfahren nach einem der Ansprüche 13 oder 14 durchzuführen.

18. Chipsystem, wobei das Chipsystem mindestens einen Chip und einen Speicher umfasst und der mindestens eine Chip dazu konfiguriert ist, ein in dem Speicher gespeichertes Programm zu lesen und auszuführen, um das Verfahren nach einem der Ansprüche 1 bis 7 oder der Ansprüche 8 bis 14 umzusetzen.

## Revendications

1. Procédé de communication, dans lequel le procédé comprend :
l'envoi (900) d'un message de demande à un serveur de configuration de périphérie, dans lequel le message de demande est utilisé pour demander des informations sur un serveur d'activation de périphérie ;
la réception (910) d'un message de réponse à partir du serveur de configuration de périphérie, dans lequel le message de réponse comprend des informations sur au moins un serveur d'activation de périphérie et des informations d'état d'un premier serveur d'application de périphérie correspondant respectivement à l'au moins un serveur d'activation de périphérie, dans lequel les informations d'état du premier serveur d'application de périphérie indiquent qu'un état du premier serveur d'application de périphérie est un état instancié ou un état instanciable mais pas encore instancié ; et
la détermination (920) d'un ou de plusieurs premiers serveurs d'activation de périphérie sur la base des informations d'état du premier serveur d'application de périphérie correspondant respectivement à l'au moins un serveur d'activation de périphérie.

2. Procédé selon la revendication 1, dans lequel la détermination (920) d'un ou de plusieurs premiers serveurs d'activation de périphérie sur la base des informations d'état du premier serveur d'application de périphérie correspondant respectivement à l'au moins un serveur d'activation de périphérie comprend :
lorsqu'un premier serveur d'application de périphérie dont l'état est un état instancié existe, la sélection d'un ou de plusieurs serveurs d'activation de périphérie à partir d'un ou de plusieurs serveurs d'activation de périphérie correspondant au premier serveur d'application de périphérie dans l'état instancié.

3. Procédé selon la revendication 1, dans lequel la détermination (920) d'un ou de plusieurs premiers serveurs d'activation de périphérie sur la base des informations d'état du premier serveur d'application de périphérie correspondant respectivement à l'au moins un serveur d'activation de périphérie comprend :
lorsqu'un premier serveur d'application de périphérie dont l'état est un état instancié n'existe pas, la sélection d'un serveur d'activation de périphérie à partir d'un ou de plusieurs serveurs d'activation de périphérie correspondant au premier serveur d'application de périphérie dans l'état instanciable mais pas encore instancié.

4. Procédé selon la revendication 2 ou 3, dans lequel avant la détermination (920) d'un ou de plusieurs premiers serveurs d'activation de périphérie sur la base des informations d'état du premier serveur d'application de périphérie correspondant respectivement à l'au moins un serveur d'activation de périphérie le procédé comprend en outre :
le fait de déterminer, sur la base des informations d'état du premier serveur d'application de périphérie correspondant respectivement à l'au moins un serveur d'activation de périphérie, si un premier serveur d'application de périphérie dont l'état est un état instancié existe.

5. Procédé selon la revendication 3 ou 4, comprenant en outre : lorsque l'instanciation du premier serveur d'application de périphérie correspondant au premier serveur d'activation de périphérie échoue, la détermination, sur la base des informations d'état du premier serveur d'application de périphérie correspondant respectivement à l'au moins un serveur d'activation de périphérie, d'un second serveur d'activation de périphérie autre que le premier serveur d'activation de périphérie, dans lequel un état d'un premier serveur d'application de périphérie correspondant au second serveur d'activation de périphérie est un état instanciable mais pas encore instancié.

6. Procédé selon la revendication 3, dans lequel, après la détermination d'un premier serveur d'activation de périphérie, le procédé comprend en outre : l'envoi d'un message de demande de découverte de serveur d'application de périphérie au premier serveur d'activation de périphérie.

7. Procédé selon l'une quelconque des revendications 1 à 6, dans lequel le procédé est réalisé par un client d'activation de périphérie.

8. Procédé de communication, dans lequel le procédé comprend :
la réception (900), par un serveur de configuration de périphérie, d'un message de demande, dans lequel le message de demande est utilisé pour demander des informations sur un serveur d'activation de périphérie ; et
l'envoi (910), par le serveur de configuration de périphérie, d'un message de réponse, dans lequel le message de réponse comprend des informations sur au moins un serveur d'activation de périphérie et des informations d'état d'un premier serveur d'application de périphérie correspondant respectivement à l'au moins un serveur d'activation de périphérie, un état d'un premier serveur d'application de périphérie correspondant à un premier serveur d'activation de périphérie dans l'au moins un serveur d'activation de périphérie est un état instanciable mais pas encore instancié,
dans lequel les informations d'état du premier serveur d'application de périphérie correspondant respectivement à l'au moins un serveur d'activation de périphérie indiquent qu'un état du premier serveur d'application de périphérie est un état instancié ou un état instanciable mais pas encore instancié ; et les informations d'état du premier serveur d'application de périphérie correspondant respectivement à l'au moins un serveur d'activation de périphérie servent à déterminer un ou plusieurs premiers serveurs d'activation de périphérie.

9. Procédé selon la revendication 8,
dans lequel la réception (900), par un serveur de configuration de périphérie, d'un message de demande comprend : la réception, par le serveur de configuration de périphérie, du message de demande à partir d'un client d'activation de périphérie ; et l'envoi, par le serveur de configuration de périphérie, d'un message de réponse comprend : l'envoi, par le serveur de configuration de périphérie, du message de réponse au client d'activation de périphérie ; ou
dans lequel la réception (910), par un serveur de configuration de périphérie, d'un message de demande comprend : la réception, par le serveur de configuration de périphérie, du message de demande à partir d'un serveur d'activation de périphérie source ; et l'envoi, par le serveur de configuration de périphérie, d'un message de réponse comprend : l'envoi, par le serveur de configuration de périphérie, du message de réponse au serveur d'activation de périphérie source.

10. Procédé selon l'une quelconque des revendications 1 à 9, dans lequel le message de demande comprend un identifiant du premier serveur d'application de périphérie.

11. Procédé selon l'une quelconque des revendications 1 à 10, dans lequel le message de demande est un message de demande de découverte de serveur d'activation de périphérie, et le message de réponse est un message de réponse de découverte de serveur d'activation de périphérie.

12. Procédé de communication comprenant : le procédé selon l'une quelconque des revendications 1 à 7 ; et le procédé selon l'une quelconque des revendications 8 à 11.

13. Procédé selon la revendication 12, comprenant en outre :
l'obtention, par un serveur d'activation de périphérie, d'informations d'état d'un premier serveur d'application de périphérie correspondant au serveur d'activation de périphérie, dans lequel le serveur d'activation de périphérie est l'un de l'au moins un serveur d'activation de périphérie ;
l'envoi, par le serveur d'activation de périphérie, d'un identifiant du serveur d'activation de périphérie, des informations d'état du premier serveur d'application de périphérie correspondant au serveur d'activation de périphérie, et d'un identifiant du premier serveur d'application de périphérie correspondant au serveur d'activation de périphérie au serveur de configuration de périphérie ; et
la réception, par le serveur de configuration de périphérie, de l'identifiant du serveur d'activation de périphérie, des informations d'état du premier serveur d'application de périphérie correspondant au serveur d'activation de périphérie et de l'identifiant du premier serveur d'application de périphérie correspondant au serveur d'activation de périphérie qui sont envoyés par le serveur d'activation de périphérie.

14. Procédé selon la revendication 13, dans lequel l'identifiant du serveur d'activation de périphérie, les informations d'état du premier serveur d'application de périphérie correspondant au serveur d'activation de périphérie et l'identifiant du premier serveur d'application de périphérie correspondant au serveur d'activation de périphérie sont transportés dans un message de demande d'enregistrement ou un message de demande de mise à jour d'enregistrement qui est envoyé par le serveur d'activation de périphérie au serveur de configuration de périphérie.

15. Appareil de communication (1300, 1400), comprenant une unité ou un module configuré pour réaliser le procédé selon l'une quelconque des revendications 1 à 11.

16. Support de stockage lisible par ordinateur, dans lequel le support de stockage stocke un programme ou des instructions informatiques, et lorsque le programme ou les instructions informatiques sont exécutés par un appareil de communication, le procédé selon l'une quelconque des revendications 1 à 11 est mis en œuvre.

17. Système de communication, dans lequel le système de communication comprend au moins deux appareils parmi un serveur de configuration de périphérie, un client d'activation de périphérie et un serveur d'activation de périphérie, dans lequel le serveur de configuration de périphérie est configuré pour réaliser le procédé selon l'une quelconque des revendications 8 à 9, le client d'activation de périphérie est configuré pour réaliser le procédé selon l'une quelconque des revendications 1 à 7 et le serveur d'activation de périphérie est configuré pour réaliser le procédé selon l'une quelconque de la revendication 13 ou 14.

18. Système de puce, dans lequel le système de puce comprend au moins une puce et une mémoire, et l'au moins une puce est configurée pour lire et exécuter un programme stocké dans la mémoire, afin de mettre en œuvre le procédé selon l'une quelconque des revendications 1 à 7 ou des revendications 8 à 14.
